(19) Europäisches Patentamt / European Patent Office / Office européen des brevets

(11) **EP 4 521 831 B1**

(12) **EUROPEAN PATENT SPECIFICATION**

(45) Date of publication and mention
of the grant of the patent:
**25.03.2026   Bulletin 2026/13**

(21) Application number: **22951409.6**

(22) Date of filing: **18.07.2022**

(51) International Patent Classification (IPC):
*H04W 72/04* (2023.01)      *H04W 72/02* (2009.01)
*H04W 72/25* (2023.01)      *H04W 72/0446* (2023.01)

(52) Cooperative Patent Classification (CPC):
**H04W 72/02;** H04W 72/0446; H04W 72/25

(86) International application number:
**PCT/CN2022/106325**

(87) International publication number:
**WO 2024/016130 (25.01.2024 Gazette 2024/04)**

(54) **RESOURCE SELECTION METHOD AND APPARATUS, RESOURCE EXCLUSION METHOD AND APPARATUS, DEVICE, AND STORAGE MEDIUM**

RESSOURCENAUSWAHLVERFAHREN UND -VORRICHTUNG, RESSOURCENAUSSCHLUSSVERFAHREN UND -VORRICHTUNG, VORRICHTUNG UND SPEICHERMEDIUM

PROCÉDÉ ET APPAREIL DE SÉLECTION DE RESSOURCES, PROCÉDÉ ET APPAREIL D'EXCLUSION DE RESSOURCES, DISPOSITIF ET SUPPORT DE STOCKAGE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.03.2025   Bulletin 2025/11**

(73) Proprietor: **GUANGDONG OPPO MOBILE TELECOMMUNICATIONS CORP., LTD.**
**Dongguan, Guangdong 523860 (CN)**

(72) Inventors:
• **DING, Yi**
**Dongguan, Guangdong 523860 (CN)**
• **ZHAO, Zhenshan**
**Dongguan, Guangdong 523860 (CN)**
• **LIN, Huei-Ming**
**Taipei Taiwan 111 (TW)**
• **WANG, Hao**
**Dongguan, Guangdong 523860 (CN)**

(74) Representative: **Novagraaf Technologies**
**2 rue Sarah Bernhardt**
**CS90017**
**92665 Asnières-sur-Seine Cedex (FR)**

(56) References cited:
WO-A1-2020/159329      WO-A1-2021/203974
WO-A1-2021/262577      CN-A- 110 536 455
CN-A- 111 526 540      CN-A- 111 726 871

• **MODERATOR (OPPO): "FL summary #3 for AI 9.4.1.1: SL-U channel access mechanism", vol. RAN WG1, no. e-Meeting; 20220509 - 20220520, 20 May 2022 (2022-05-20), XP052204009, Retrieved from the Internet <URL:https:// ftp.3gpp.org/tsg_ran/WG1_RL1/TSGR1_109-e/ Docs/R1-2205182.zip R1-2205182 summary for SL-U channel access v314.docx> [retrieved on 20220520]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

Embodiments of the present disclosure relate to the technical field of communications, and in particular, relate to a method and apparatus for resource reselection, a method and apparatus for resource exclusion, and a device and a storage medium thereof.

**BACKGROUND**

In sidelink (SL) communication, a terminal device may select transmission resources from a resource pool by sensing.

D1 (MODERATOR (OPPO): "FL summary #3 for AI 9.4.1.1: SL-U channel access mechanism", 3GPP DRAFT; R1-2205182, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; FRANCE, vol. RAN WG1, no. e-Meeting; 20220509 - 20220520 20 May 2022, XP052204009) discloses contributions related to the channel access mechanisms for SL-U.

D2 (WO 2021/203974 A1) discloses a user equipment (UE) and a sidelink resource exclusion method. The sidelink resource exclusion method includes identifying a first sidelink resource selected by the UE or reserved by a peer UE in a first slot from a candidate resource set in a resource selection window and in a first sidelink resource pool and excluding the first sidelink resource and/or sidelink subchannels in the first slot from the candidate resource set.

D3 (WO 2021/262577 A1) discloses methods, systems, and devices for wireless communications. A UE may determine resource selection priority levels associated with available resources for sidelink signaling in an unlicensed radio frequency spectrum band, the resources selection priority levels may be determined based on re-source reservation information of the available resources, a time domain location of the available resources, or both.

**SUMMARY**

Embodiments of the present disclosure provide a method and apparatus for resource reselection, a method for resource exclusion. The technical solutions are as follows.

According to some embodiments of the present disclosure, a method for resource selection is provided. The method is applicable to a terminal device, and the method includes: determining a resource selection window and a resource sensing window; determining an initialized first resource set, wherein the initialized first resource set includes at least one first resource within the resource selection window; performing resource exclusion on the initialized first resource set by a resource exclusion process, wherein the resource exclusion process includes a second exclusion process, wherein the second exclusion process is configured to perform the resource exclusion based on first sidelink control information monitored within the resource sensing window; and selecting a transmission resource from a first resource set after the resource exclusion on the first resource set; wherein any resource within the first resource set is a first resource, wherein the first resource corresponds to N consecutive time units in a time domain, N being an integer greater than 1; wherein the second exclusion process includes: determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the first resource from the first resource set in a case that a resource indicated in the first sidelink control information that is monitored and assumed to be received is overlapped with the first resource within the first resource set or overlapped with a resource corresponding to the first resource and meets an reference signal received power (RSRP) threshold condition.

According to some embodiments of the present disclosure, a method for resource exclusion is provided. The method is applicable to a terminal device, and the method includes: determining a resource selection window and a resource sensing window; determining an initialized second resource set, wherein the initialized second resource set includes at least one second resource within the resource selection window; performing resource exclusion on the initialized second resource set by a resource exclusion process, wherein the resource exclusion process includes a second exclusion process, wherein the second exclusion process is configured to perform the resource exclusion based on first sidelink control information monitored within the resource sensing window; and upon performing the resource exclusion on a second resource set, raising a reference signal received power (RSRP) threshold in a case that a number of second resources within the second resource set meeting a first condition is less than a first threshold, and reperforming the resource exclusion on the second resource set upon initialization of the second resource set, wherein the first condition includes at least N consecutive time units from a time unit of a second resource all including a non-excluded second resource, wherein N is an integer greater than 1; wherein the second exclusion process includes: determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the second resource from the second resource set in a case that a resource indicated in the first sidelink control information that is monitored and assumed to be received is overlapped with the second resource within the second resource set or overlapped with a resource corresponding to the second resource and meets an reference signal received power, RSRP, threshold condition.

According to some embodiments of the present disclosure, an apparatus for resource selection is provided. The apparatus includes: a excluding module, configured to: determine a resource selection window and a resource sensing window; determine an initialized first resource set, wherein the initialized first resource set includes at least one first resource within the resource selection window; and perform resource exclusion on the initialized first resource set by a resource exclusion process, wherein the resource exclusion process includes a second exclusion process, wherein the second exclusion process is configured to perform the resource exclusion based on first sidelink control information monitored within the resource sensing window; and a selecting module, configured to select a transmission resource from a first resource set after resource exclusion on the first resource set; wherein any resource within the first resource set is a first resource, wherein the first resource corresponds to N consecutive time units in a time domain, N being an integer greater than 1; wherein the second exclusion process includes: determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the first resource from the first resource set in a case that a resource indicated in the first sidelink control information that is monitored and assumed to be received is overlapped with the first resource within the first resource set or overlapped with a resource corresponding to the first resource and meets an RSRP threshold condition.

## BRIEF DESCRIPTION OF THE DRAWINGS

FIG. 1 is a schematic diagram of a network architecture according to some embodiments of the present disclosure;
FIG. 2 is a schematic diagram of a physical layer structure of SL communication according to some embodiments of the present disclosure;
FIG. 3 is a schematic diagram of time-frequency resource position reservation according to some embodiments of the present disclosure;
FIG. 4 is a schematic diagram of resource sensing and resource selection according to some embodiments of the present disclosure;
FIG. 5 is a schematic diagram of an interlaced resource block (IRB) according to some embodiments of the present disclosure;
FIG. 6 is a schematic diagram of division of a resource block set according to some embodiments of the present disclosure;
FIG. 7 is a flowchart of a method for resource selection according to some embodiments of the present disclosure;
FIG. 8 is a schematic diagram of the resource selection according to some embodiments shown in FIG. 7;
FIG. 9 is a flowchart of a method for resource exclusion according to some embodiments of the present disclosure;
FIG. 10 is a schematic diagram of the resource exclusion according to some embodiments shown in FIG. 9;
FIG. 11 is a block diagram of an apparatus for resource reselection according to some embodiments of the present disclosure;
FIG. 12 is a block diagram of an apparatus for resource exclusion according to some embodiments of the present disclosure; and
FIG. 13 is a schematic structural diagram of a terminal device according to some embodiments of the present disclosure.

## DETAILED DESCRIPTION

For clearer descriptions of the objectives, technical solutions, and advantages of the present disclosure, embodiments of the present disclosure are further described in detail hereinafter with reference to the accompanying drawings.

The network architecture and service scenarios described in the embodiments of the present disclosure are intended to describe the technical solutions according to the embodiments of the present disclosure more clearly, but do not constitute any limitation on the technical solutions according to the embodiments of the present disclosure. Those of ordinary skilled in the art understand that, with the evolution of the network architecture and the emergence of new service scenarios, the technical solutions according to the embodiments of the present disclosure are also applicable to similar technical problems.

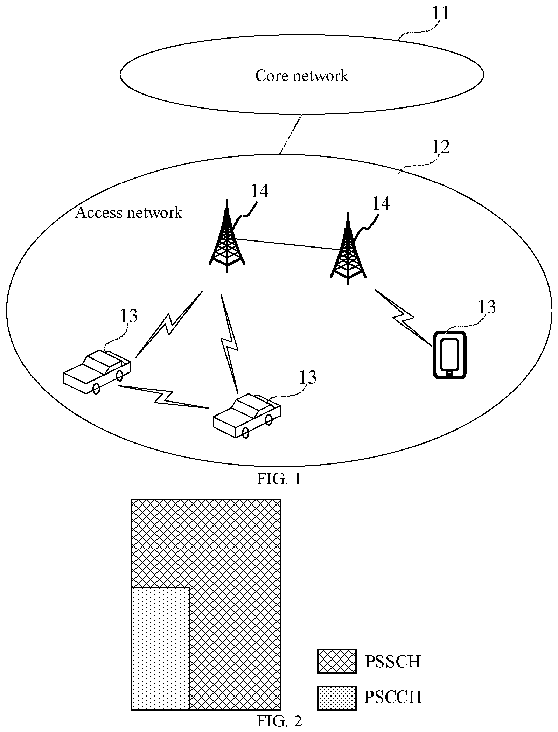

Referring to FIG. 1, a schematic diagram of a network architecture according to some embodiments of the present disclosure is illustrated. The network architecture includes: a core network 11, an access network 12, and terminal devices 13.

The core network 11 includes a plurality of core network devices. The core network devices mainly function to provide user connection, user management, and service bearing, and serve as a bearer network to provide an interface to an external network. For example, the core network of a 5th generation mobile communication (5G) new radio (NR) system includes devices such as an access and mobility management function (AMF) entity, a user plane function (UPF) entity, and a session management function (SMF) entity.

The access network 12 includes a plurality of access network devices 14. The access network in the 5G NR system may be referred to as a new generation-radio access network (NG-RAN). The access network devices 14 refer to apparatuses deployed in the access network 12 to provide wireless communication functionality for the terminal devices 13. The access network device 14 includes various forms of macro base stations, micro base stations, relay stations, access points, and the like. The name of the device with the functionality of an access network device varies in systems employing different radio access technologies. For example, the device is referred to as a gNodeB or a gNB in the 5G NR system. With the evolution of communication technologies, the name "access network device" may change. For the convenience of description, the above apparatuses providing the wireless communication functionality for the terminal devices 13 are collectively referred to as the access network device in the embodiments of the present disclosure.

Typically, a plurality of terminal devices 13 are provided, and one or more terminal devices 13 may be distributed in a cell managed by each of the access network devices 14. The terminal devices 13 may include various handheld devices, in-vehicle devices, wearable devices, computing devices, other processing devices connected to a radio modem with the wireless communication functionality, various forms of user devices, mobile stations (MS), and the like. For convenience of description, the devices described above are collectively referred to as the terminal devices. The access network devices 14 communicate with the core network devices using an air technology, such as an NG interface in the 5G NR system. The access network devices 14 communicate with the terminal devices 13 using an air interface technology, such as a Uu interface.

The terminal devices 13 (for example, the in-vehicle device and another device, such as another in-vehicle device, a mobile phone, or a road side unit (RSU)) may communicate with each other over a direct communication interface (for example, a PC5 interface). Accordingly, the communication link established based on the direct communication interface may be referred to as a direct link or SL. The SL transmission means that communication data transmission is carried out directly between the terminal devices over an SL, which is different from a conventional cellular system in which the communication data is received or transmitted by access network devices. The SL transmission has characteristics of short delay and low overhead, and is therefore suitable for communication between two terminal devices that are geographically close to each other, such as an in-vehicle device and another peripheral device that is geographically close to the in-vehicle device. It should be noted that, in FIG. 1, only vehicle-to-vehicle communication in a vehicle to everything (V2X) scenario is illustrated, while the SL technology is applicable to various scenarios where terminal devices directly communicate with each other. In other words, the terminal device in the present disclosure refers to any device that communicates using the SL technology.

The "5G NR system" in the embodiments of the present disclosure may also be referred to as a 5G system or an NR system, but those skilled in the art can understand the meaning thereof. The technical solutions described in the embodiments of the present disclosure are applicable to the 5G NR system, and also to evolved systems of the 5G NR system.

Before description of the technical solutions of the present disclosure, some background technical knowledge involved in the present disclosure is first explained. The following related technologies may be combined with the technical solutions according to the embodiments of the present disclosure in any manner, all of which fall within the scope of protection of the embodiments of the present disclosure. The embodiments of the present disclosure include at least some of the following content.

1. SL Transmission

Regarding SL transmission, 3GPP has defined two transmission modes.

In mode A, transmission resources of the terminal device are allocated by an access network device (such as a base station). The terminal device transmits communication data over the sidelink based on the transmission resources allocated by the access network device. The access network device may allocate transmission resources to the terminal device for single transmission, or allocate transmission resources to the terminal device for semi-static transmission.

In mode B, the terminal device selects transmission resources from a resource pool autonomously for the transmission of communication data. Specifically, the terminal device may select transmission resources from the resource pool either by sensing or by random selection.

Next, SL communication in NR V2X systems where the terminal device autonomously selects resources (i.e., the mode B described above) is mainly described.

2. NR V2X Physical Layer Structure

A physical layer structure of SL communication in the NR V2X system is shown in FIG. 2. In the structure, a physical sidelink control channel (PSCCH) is configured to bear first stage sidelink control information (SCI) (1st-stage-SCI), and a physical sidelink shared channel (PSSCH) is configured to bear data and second stage SCI (2nd-stage-SCI). The PSCCH and the PSSCH are transmitted in the same slot. The 1 st-stage-SCI and the 2nd-stage-SCI may be two pieces of sidelink control information having different functions. For example, the1st-stage-SCI is carried in the PSCCH and mainly includes fields related to resource sensing, facilitating other terminal devices to perform resource exclusion and resource selection upon decoding. In the PSSCH, the 2nd-stage-SCI is further carried in addition to data, and mainly includes fields related to data demodulation, facilitating other terminal devices to demodulate the data in the PSSCH.

3. Resource Reservation in NR V2X

In the NR V2X system, in the mode B described above, the terminal device selects transmission resources autonomously for data transmission. Resource reservation is a prerequisite for resource selection.

The resource reservation means that the terminal device transmits the first sidelink control information (the 1st-stage-SCI described above) in the PSCCH to reserve resources to be used next. The NR V2X system supports intra-transport block (TB) resource reservation and inter-TB resource reservation is supported as well.

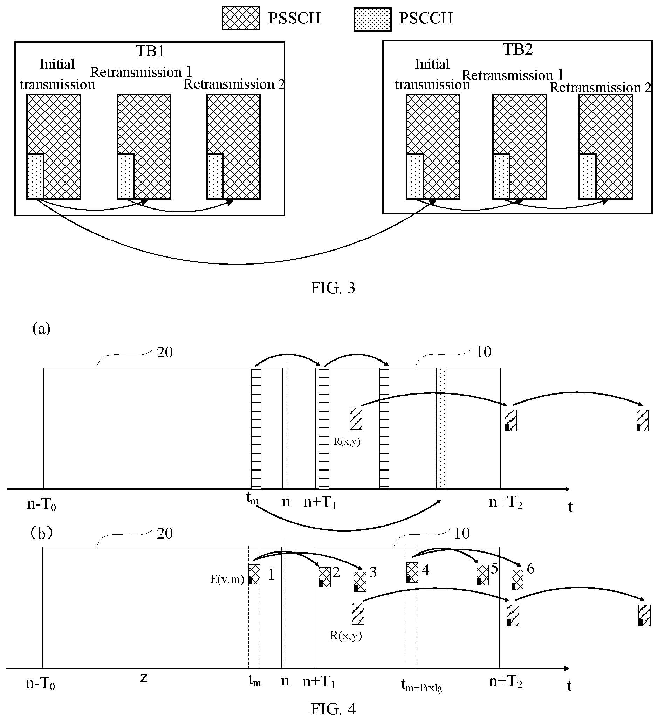

As shown in FIG. 3, the terminal device transmits the first sidelink control information, and indicates N time-frequency resources (including a resource used for current transmission) of a current TB by using the "time resource assignment" and "frequency resource assignment" fields in the first sidelink control information. $N \leq Nmax$, and Nmax is equal to 2 or 3 in NR V2X. Further, the indicated N time-frequency resources should be distributed in W slots. W is equal to 32 in NR V2X. For example, in a TB1 as shown in FIG. 3, the terminal device transmits the first sidelink control information over the PSCCH while transmitting initial transmission data over the PSSCH, and indicates time-frequency resource positions for initial transmission and retransmission 1 (i.e., N=2 in this case) by using the two fields described above. That is, a time-frequency resource for retransmission 1 is reserved. Moreover, initial transmission and retransmission 1 are distributed in 32 slots in a time domain. Similarly, in the TB1 as shown in FIG. 3, the terminal device indicates time-frequency resource positions for retransmission 1 and retransmission 2 using the first sidelink control information transmitted over the PSCCH of retransmission 1, and retransmission 1 and retransmission 2 are distributed in 32 slots in the time domain.

Besides, in transmitting the first sidelink control information, the terminal device performs the inter-TB resource reservation by using a "Resource reservation period" field. For example, in FIG. 3, in transmitting the first sidelink control information of initial transmission of the TB1, the terminal device indicates time-frequency resource positions for initial transmission and retransmission 1 of the TB1 by using the "time resource assignment" and "frequency resource assignment" fields, which are denoted as $\{(t_1, f_1), (t_2, f_2)\}$. $t_1$ and $t_2$ represent the time domain positions of initial transmission and retransmission 1 resources of the TB1, and $f_1$ and $f_2$ represent corresponding frequency domain positions. In the case that a value of the "resource reservation period" field in the first sidelink control information is 100 ms, the SCI simultaneously indicates the time-frequency resources $\{(t_1+100, f_1), (t_2+100, f_2)\}$. The two resources are used for the initial transmission and the retransmission 1 of TB2. Similarly, the first sidelink control information transmitted in retransmission 1 of the TB1 also reserves time-frequency resources for retransmission 1 and retransmission 2 of the TB2 by using the "resource reservation period" field. In NR V2X, the possible values for the "resource reservation period" field are 0, 1-99, 100, 200, 300, 400, 500, 600, 700, 800, 900, and 1000 ms, offering greater flexibility compared to LTE V2X. However, only e values are configured in each resource pool, and the terminal device determines a possible value to be used based on the used resource pool. The e values in the resource pool configuration are denoted as a resource reservation period set M, and exemplarily, e is less than or equal to 16.

In addition, the inter-TB reservation may be activated or deactivated on a resource pool basis by means of network configuration or pre-configuration. In the case that the inter-TB reservation is activated, the first sidelink control information includes the "resource reservation period" field. In the case that the inter-TB reservation is deactivated, the first sidelink control information does not include the "resource reservation period" field. In the case that the inter-TB reservation is activated, the value of the "resource reservation period" field used by the terminal device, i.e., the resource reservation period, is generally not changed prior to trigger of resource reselection. The terminal device reserves resources for a following period by using the "resource reservation period" field in the first sidelink control information for transmission of another TB every time the terminal device transmits the first sidelink control information, such that periodic semi-persistent transmission is achieved.

In the case that the terminal device operates in the mode B, the terminal device may acquire the first sidelink control information transmitted by another terminal device by sensing the PSCCHs from another terminal device to acknowledge the resources reserved by another terminal device. In resource selection, the terminal device excludes the resources reserved by another terminal device to avoid resource collision.

4. Resource Selection Method for NR V2X Sensing

In the NR V2X system, the terminal device needs to select resources autonomously in the mode B.

As shown in FIG. 4, the terminal device triggers resource selection or reselection in a slot n, or the slot n is a slot where a higher layer triggers a physical layer to report a candidate resource set. A resource selection window 10 starts from $n+T_1$ and ends at $n+T_2$. $0 \leq T1 \leq T_{proc,1}$, and $T_{proc,1}$ is 3, 5, 9, or 17 slots in the case that the subcarrier spacing is 15, 30, 60, or 120 kHz. $T_{2min} \leq T_2 \leq$ a remaining delay budget of service, and a value set of $T_{2min}$ is $\{1, 5, 10, 20\}*2^\mu$ slots. $\mu=0, 1, 2,$ or 3, which correspond to the subcarrier spacing being 15, 30, 60, or 120 kHz, respectively. The terminal device determines $T_{2min}$ from the value set based on a priority of its own to-be-transmitted data. For example, in the case that the subcarrier spacing is 15 kHz, the terminal device determines $T_{2min}$ from the set $\{1, 5, 10, 20\}$ based on the priority of its own to-be-transmitted data. In the case that $T_{2min}$ is greater than or equal to the remaining delay budget of service, $T_2$ is equal to the remaining delay budget of service. The remaining delay budget means a difference between a corresponding time of a delay requirement of the data and a current time. For example, for a packet arriving in the slot n, the delay requirement is 50 ms. Assuming that one slot is 1 ms, then the remaining delay budget is 50 ms in the case that the current time is the slot n, and the remaining delay budget is 30 ms in the case that the current time is a slot n+20.

The terminal device senses resources from $n-T_0$ to $n-T_{proc,0}$ (excluding $n-T_{proc,0}$), and a value of $T_0$ is 100 or 1100 ms. In the case that the subcarrier spacing is 15, 30, 60, or 120 kHz, $T_{proc,0}$ is 1, 1, 2, or 4 slots. In some embodiments, the terminal device senses resources in a slot that is within a resource pool used by the terminal device within a resource sensing window. In some embodiments, the terminal device senses the first sidelink control information transmitted by another terminal device in each slot (except for its own transmission slot), and the terminal device uses the results of resource sensing in $n-T_0$ to $n-T_{proc,0}$ upon trigger of resource selection or reselection in the slot n.

In step 1, the terminal device regards all available resources within the resource pool used by the terminal device in the resource selection window 10 as a resource set A, and any of the resources within the set A is denoted as the resource R(x,y). x and y respectively indicate a frequency domain position and a time domain position of the resource. An initial number of the resources within the set A is denoted as $M_{total}$. The terminal device excludes resources within the resource set A based on a non-monitored slot in the resource sensing window 20 (step 1-1) and/or resource sensing results in the resource sensing window 20 (step 1-2). The terminal device determines whether the resource R(x,y) or a series of periodic resources corresponding to the resource R(x,y) is overlapped with a slot determined based on the non-monitored slot in step 1-1 or a resource determined based on the sensed first sidelink control information in step 1-2, and excludes the resource R(x,y) from the resource set A in the case that these resources are overlapped with each other.

In step 1-1, in the case that the terminal device transmits data in the slot $t_m$ within the resource sensing window 20 and does not carry out sensing, the terminal device determines corresponding Q slots based on the slot $t_m$ and each allowed resource reservation period in the resource pool used by the terminal device, having the resource reservation period as an interval. In the case that the Q slots are overlapped with the resource R(x,y) or a series of periodic resources corresponding to the resource R(x,y), the resource R(x,y) is excluded from the resource set A. $Q=1$ or $Q=\lceil Tscal/Prx \rceil$ (for rounding up). Tscal is equal to a value of $T_2$ converted into milliseconds. Prx is one of the resource reservation periods allowed by the resource pool used by the terminal device. In some embodiments, a series of periodic resources corresponding to the resource R(x,y) are R(x,y+j*Ptxlg), j=0,1,2,···,Cresel-1. The Cresel is related to a random count value generated by the terminal device, and Ptxlg is the number of logical slots converted from. Ptx is the resource reservation period of the terminal device. for example, the case that the Cresel is equal to 3 in FIG. 4(a) means three periodic resources corresponding to the resource R(x,y) (including R(x,y)).

For example, in FIG. 4(a), the terminal device does not carry out sensing in the slot $t_m$, but performs resource exclusion in sequence based on each resource reservation period in the resource reservation period set M in the used resource pool configuration. For a resource reservation period 1, assuming that the Q value is calculated as 2, then the corresponding Q slots are two following slots mapped from the slot $t_m$ in FIG. 4(a) as indicated by horizontal line shadow, having the resource reservation period 1 as an interval. For a resource reservation period 2, assuming that the Q value is calculated as 1, then the corresponding Q slots are one following slot mapped from the slot $t_m$ in FIG. 4(a) as indicated by dotted shadow, having the resource reservation period 2 as an interval.

The terminal device determines whether Q slots corresponding to each reservation period are overlapped with the resource R(x,y) or a series of periodic resources corresponding to the resource R(x,y), and excludes the resource R(x,y) from the resource set A in the case that these resources are overlapped with each other.

In some embodiments, in the case that the inter-TB reservation is deactivated for the resource pool used by the terminal device, the terminal device does not perform step 1-1.

In some embodiments, upon completion of step 1-1, in the case that the number of remaining resources within the resource set A are less than $M_{total}$*X, the resource set A is initialized into all available resources within the resource pool used by the terminal device in the resource selection window 10, and then step 1-2 is performed.

In step 1-2, in the case that the terminal device senses the first sidelink control information transmitted in the PSCCH within the slot $t_m$ of the resource sensing window 20, a sidelink reference signal received power (SL-RSRP) of the PSCCH or a SL-RSRP of the PSSCH scheduled by the PSCCH (that is, the SL-RSRP of the PSCCH transmitted in the same slot as the PSCCH) is measured.

In the case that the measured SL-RSRP is greater than an SL-RSRP threshold and the first sidelink control information received by the terminal device includes the "resource reservation period" field, the terminal device determines the corresponding Q slots based on the slot $t_m$ and the resource reservation period carried in the sensed first sidelink control information, having the resource reservation period as an interval. The terminal device assumes that the first sidelink control information with the same content is received in the Q slots. The terminal device determines whether the resources indicated in the "time resource assignment" and "frequency resource assignment" fields of the first sidelink control information received in the slot $t_m$ and the Q pieces of the first sidelink control information assumed to be received are overlapped with the resource R(x,y) or a series of periodic resources corresponding to the resource R(x,y), and excludes the corresponding resource R(x,y) from the set A in the case that these resources are overlapped with each other. The above Q=1 or $Q=\lceil Tscal/Prx \rceil$ (for rounding up). Tscal is equal to a value of $T_2$ converted into milliseconds. Prx is the resource reservation period carried in the sensed first sidelink control information. In some embodiments, a series of periodic resources corresponding to the resource R(x,y) are R(x,y+j *Ptxlg), j=0,1,2,···,Cresel-1. The Cresel is related to a random count value generated by the terminal device, and Ptxlg is the number of logical slots converted from Ptx. Ptx is the resource reservation period of the terminal device. for example, the case that the Cresel is equal to 3 in FIG. 4(b) means three periodic resources corresponding to the resource R(x,y) (including the resource R(x,y)).

For example, in FIG. 4(b), in the case that the first sidelink control information received by the terminal device includes the "resource reservation period" field, the terminal device senses the first sidelink control information in the PSCCH in the slot $t_m$ resource E(v,m), having the resource reservation period in the field being Prx. Assuming that the Q value is calculated as 1, then the terminal device assumes that the first sidelink control information with the same content is also received in the slot $t_{m+Prxlg}$. The terminal device determines whether the resources 1, 2, 3, 4, 5, and 6 indicated in the "time resource assignment" and "frequency resource assignment" fields of the first sidelink control information received in the slot $t_m$ and the first sidelink control information assumed to be received in the slot $t_{m+Prxlg}$ are overlapped with the resource R(x,y) or a series of periodic resources corresponding to the resource R(x,y), and excludes the resource R(x,y) from the resource set A in the case that these resources are overlapped with each other and the RSRP condition is met.

In the case that the SL-RSRP measured by the terminal device is greater than the SL-RSRP threshold and the first sidelink control information received by the terminal device does not include the "resource reservation period" field, the terminal device only determines whether the resource indicated in the "time resource assignment" and "frequency resource assignment" fields of the first sidelink control information received in the slot $t_m$ is overlapped with the resource R(x,y) or a series of resources corresponding to the resource R(x,y), and excludes the resource R(x,y) from the resource set A in the case that these resources are overlapped with each other.

For example, in FIG. 4(b), in the case that the first sidelink control information received by the terminal device does not include the "resource reservation period" field, and the terminal device senses the first sidelink control information in the PSCCH in the slot $t_m$ resource E(v,m), the terminal device determines whether the resources 1, 2, and 3 indicated in the "time resource assignment" and "frequency resource assignment" fields in the first sidelink control information are overlapped with the resource R(x,y) or a series of periodic resources corresponding to the resource R(x,y), and excludes the resource R(x,y) from the resource set A in the case that these resources are overlapped with each other and the RSRP condition is met.

In the case that the number of the remaining resources within the resource set A upon the resource exclusion is less than $M_{total}$*X, the SL-RSRP threshold is raised by 3 dB, and step 1 is performed again. The physical layer reports the resource set A upon resource exclusion to a higher layer as a candidate resource set.

In step 2, the higher layer randomly selects resources from the reported candidate resource set for data transmission. That is, the terminal device randomly selects resources from the candidate resource set for data transmission.

It should be noted that:

1. The RSRP threshold is determined based on the priority P1 carried in the PSCCH sensed by the terminal device and the priority P2 of the data to be transmitted by the terminal device. The configuration of the resource pool used by the terminal device includes an SL-RSRP threshold table, and the SL-RSRP threshold table includes SL-RSRP thresholds corresponding to all priority combinations. The configuration of the resource pool may be configured on the network or preconfigured.

For example, as listed in Table 1, it is assumed that the selectable values of the priority levels of both P1 and P2 are 0 to 7, the SL-RSRP thresholds corresponding to different priority combinations are represented by $\gamma_{ij}$. In $\gamma_{ij}$, i is a value of the priority level P1, and j is a value of the priority level P2.

Table 1: SL-RSRP threshold table

| P2 / P1 | 0 | 1 | 2 | 3 | 4 | 5 | 6 | 7 |
|---|---|---|---|---|---|---|---|---|
| 0 | $\gamma_{00}$ | $\gamma_{01}$ | $\gamma_{02}$ | $\gamma_{03}$ | $\gamma_{04}$ | $\gamma_{05}$ | $\gamma_{06}$ | $\gamma_{07}$ |
| 1 | $\gamma_{10}$ | $\gamma_{11}$ | $\gamma_{12}$ | $\gamma_{13}$ | $\gamma_{14}$ | $\gamma_{15}$ | $\gamma_{16}$ | $\gamma_{17}$ |
| 2 | $\gamma_{20}$ | $\gamma_{21}$ | $\gamma_{22}$ | $\gamma_{23}$ | $\gamma_{24}$ | $\gamma_{25}$ | $\gamma_{26}$ | $\gamma_{27}$ |
| 3 | $\gamma_{30}$ | $\gamma_{31}$ | $\gamma_{32}$ | $\gamma_{33}$ | $\gamma_{34}$ | $\gamma_{35}$ | $\gamma_{36}$ | $\gamma_{37}$ |
| 4 | $\gamma_{40}$ | $\gamma_{41}$ | $\gamma_{42}$ | $\gamma_{43}$ | $\gamma_{44}$ | $\gamma_{45}$ | $\gamma_{46}$ | $\gamma_{47}$ |
| 5 | $\gamma_{50}$ | $\gamma_{51}$ | $\gamma_{52}$ | $\gamma_{53}$ | $\gamma_{54}$ | $\gamma_{55}$ | $\gamma_{56}$ | $\gamma_{57}$ |
| 6 | $\gamma_{60}$ | $\gamma_{61}$ | $\gamma_{62}$ | $\gamma_{63}$ | $\gamma_{64}$ | $\gamma_{65}$ | $\gamma_{66}$ | $\gamma_{67}$ |
| 7 | $\gamma_{70}$ | $\gamma_{71}$ | $\gamma_{72}$ | $\gamma_{73}$ | $\gamma_{74}$ | $\gamma_{75}$ | $\gamma_{76}$ | $\gamma_{77}$ |

In the case that the terminal device senses the PSCCH transmitted by another terminal device, the terminal device acquires the priority P1 carried in the first sidelink control information transmitted in the PSCCH and the priority P2 of the to-be-transmitted data, and determines an SL-RSRP threshold by looking up in Table 1.

2. Whether the terminal device compares the measured PSCCH-RSRP or a PSSCH-RSRP scheduled by the PSCCH with the SL-RSRP threshold depends on the resource pool configuration of the resource pool used by the terminal device. The resource pool configuration may be configured on the network or preconfigured.

3. The value of X described above is possibly {20%, 35%, 50%}. The configuration of the resource pool used by the terminal device includes correspondence between the priorities and the possible values described above, and the terminal device determines the value of X based on the priority of the to-be-transmitted data and the correspondence. The resource pool configuration may be configured on the network or preconfigured.

4. The resource reservation period is converted into logical slots.

As mentioned above, the terminal device transmits the first sidelink control information to indicate time-frequency resources to reserve resources to be used next. In sensing, the terminal device for resource selection decodes the first sidelink control information transmitted by another terminal device to acquire resources reserved by another terminal device, and then excludes the corresponding resources during resource selection to avoid resource collision. In resource exclusion, the terminal device for resource selection converts a physical time (for example, 100 ms) indicated in the "resource reservation period" field in the decoded first sidelink control information into a corresponding number of logical slots, and then performs resource exclusion by using the number of the logical slots:

$$P'_{\text{rsvp}} = \left\lceil \frac{T'_{max}}{10240\ ms} \times P_{\text{rsvp}} \right\rceil$$

In the above formula, Prsvp represents a resource reservation period, for example, a resource reservation period indicated in the "resource reservation period" in the first sidelink control information sensed by the terminal device, or a resource reservation period allowed in the resource pool, or a resource reservation period of the terminal device, and P'rsvp represents a corresponding calculated number of logical slots. T'max represents the number of slots within a resource pool or a transmission resource pool of the terminal device in a system frame number (SFN) period or in 10240 ms.

The above description is for the SL communication method in NR-V2X. That is, the terminal device autonomously selects transmission resources by resource sensing and autonomously performs data transmission on the sidelink. The SL communication method is applicable to various SL communications such as direct communication between handheld terminals and direct communication between pedestrians and vehicles.

5. Physical Layer Structure of Unlicensed SL (SL-U)

In the case that the NR SL technology operates in the unlicensed spectrum, regulatory requirements in relevant areas, such as occupied channel bandwidth (OCB) and power spectral density (PSD) requirements, need to be considered in the system design. For example, for unlicensed spectrum within the 5GHz frequency range, European regulatory requirements include minimum OCB and maximum PSD requirements. For the OCB requirement, the occupied channel bandwidth should not be less than 80% of the total channel bandwidth in the case that the terminal device uses the channel for data transmission, and for SL-U, reference may be made to the IRB structure in NR-U to meet the OCB occupancy requirement. For example, the 80% bandwidth requirement herein means that a span between a lowest PRB and a highest PRB accounts for 80% of the total bandwidth. 80% of the total bandwidth is occupied in the case of continuous occupancy of the frequency domain in FIG. 2, and therefore data of only one user can be transmitted in one slot. Based on the interlaced structure, the frequency domain continuous occupancy in FIG. 2 changes to discrete occupancy, such that 80% of the span is ensured without actually occupying 80% of the bandwidth.

One interlaced resource includes N discrete PRBs of the frequency domain, M interlaced resources are in the frequency band range, and PRBs in the $m^{th}$ interlace is {m,M+m,2M+m, 3M+m,... }.

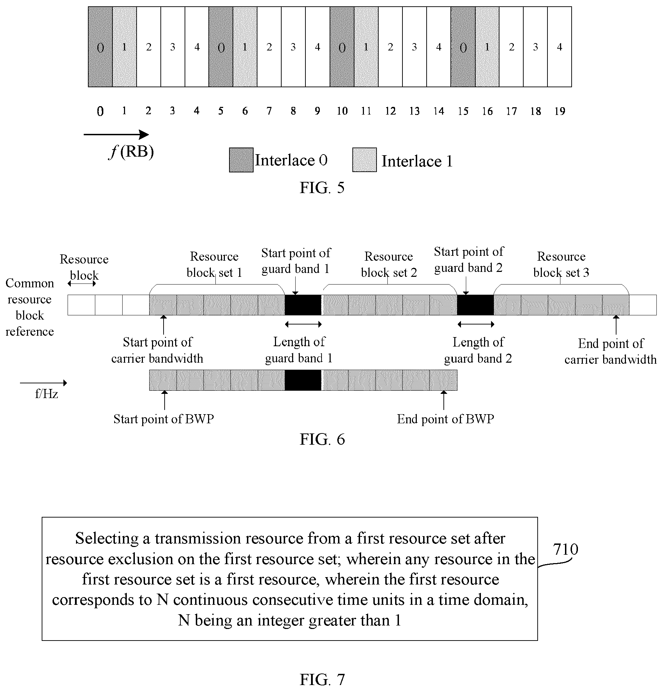

As shown in FIG. 5, the system bandwidth includes 20 PRBs (one PRB corresponds to 12 subcarriers) and five interlaces (that is, M=5). Each interlace includes four PRBs (that is, N=4). The frequency domain intervals between two adjacent PRBs in the interlace are the same, that is, five PRBs. The numbers in the box in the drawings represent the interlace index. It should be noted that the PRB in the interlace is also referred to as an IRB, and the interlace is also referred to as the IRB.

In addition to the IRB structure, the resource block (RB) set is also introduced in the SL-U.

The frequency domain resources on the carrier are organized into a plurality of RB sets, and guard frequency bands (guard bands for short) are configured or not configured between the RB sets. For example, an RB set corresponds to a frequency domain width of 20MHz. The communication device needs to perform listen before talk (LBT) on the unlicensed spectrum, and the data is transmitted upon success of the LBT. The LBT is performed based on the granularity of one RB set, and thus one RB set is also referred to as an LBT sub-band. In the case that the communication device transmits data on the RB set, the LBT needs to be performed on the corresponding RB set, and the data is transmitted upon success of the LBT. One RB set includes a plurality of IRBs. For simplicity, in FIG. 6, one resource block actually corresponds to one IRB in FIG. 5. In general, the BWP configured for the communication device includes an integer number of RB sets.

In the SL-U, in one possible design, the resource pool contains an integer number of RB sets (and guard bands between the RB sets), and each RB set includes a plurality of IRBs. Furthermore, the concept of sub-channels in the resource pool continues to be used, that is, a sub-channel is defined as one or more IRBs, or, the terminal device transmits directly on one or more IRBs without using the sub-channel.

6. Specific Classification of the LBT

In type 1, a random count value is generated. In the case that a listening slot is idle, 1 is subtracted from the random count value. In the case that a listening slot is active, no subtraction is performed for the random count value. In the case that the random count value is subtracted to 0, the channel is accessible and data transmission is allowed thereon. In the case that the random count value is subtracted to 0 and the communication device has not data to transmit, the random count value does not need to be generated again, and the LBT with a fixed time length only needs to be performed in the case that the communication device needs to transmit data. In the case that the LBT is successful, that is, the channel is idle within the fixed time length, the channel is accessed.

In type 2A, the communication device listens channels with a length of 25 microseconds (denoted as Tshort). In the case that all listening slots within the Tshort are idle, the communication device may directly access the channel.

In type 2B, the communication device listens channels with a length of 16 microseconds (denoted as Tf). In the case that the listening slots within the Tf are idle, the communication device may directly access the channel.

7. Back-to-back (B2B) transmission

Based on the above description, in the unlicensed spectrum, the communication device needs to perform the LBT first, and the channel is accessed only upon success of the LBT. In the case that the LBT of the communication device is successfully, and the channel is accessed, the time of occupying the channel is referred to as the channel occupancy time (COT). Within the COT, the communication device transmits continuously or non-continuously. Therefore, the B2B transmission is introduced into the SL-U to fully utilize the COT initiated upon success of the LBT. That is, the communication device continuously transmits in a plurality of slots to improve the utilization of the COT. Simultaneous and continuous using/occupancy of the channel also facilitates contention for the channel with another system. For example, in the case that the SL-U terminal adopts the B2B transmission, wireless fidelity (Wi-Fi) users cannot successfully access the channel concurrently due to continuous channel occupancy.

Based on above description, the B2B transmission is introduced in the SL-U system. That is, the terminal device performs transmission on a plurality of contiguous slots. Therefore, how to ensure that the terminal device selects contiguous transmission resources in the time domain in the resource selection process is a to-be-solved problem and has not been discussed in the standards. Specifically, the problem may be solved in the physical layer. That is, candidate resources within a candidate resource set reported by the physical layer are contiguous resources in the time domain, and the higher layer randomly selects resources from the candidate resource set. Alternatively, the problem may be solved in the higher layer. That is, candidate resources within a candidate resource set reported by the physical layer are discrete or contiguous resources in the time domain, and the B2B transmission is introduced to prioritize selecting contiguous resources in the time domain in the case that the higher layer selects resources from the candidate resource set. Thus, the above solutions are respectively discussed in the present disclosure by detailing behaviors of the terminal device. The technical solutions according to the present disclosure are described in conjunction with several embodiments hereinafter.

Referring to FIG. 7, a flowchart of a method for resource selection according to some embodiments of the present disclosure is illustrated. The method is applicable to the network architecture shown in FIG. 1, such as a terminal device. The method includes following processes.

In S710, a transmission resource is selected from a first resource set upon resource exclusion on the first resource set, wherein any resource within the first resource set is a first resource, wherein the first resource corresponds to N consecutive time units in a time domain, N being an integer greater than 1.

The first resource set includes at least one first resource, and each resource within the first resource set is the first resource. That is, each resource within the first resource set corresponds to a plurality of consecutive time units in the time domain.

In the embodiments of the present disclosure, the first resource corresponds to two or more consecutive time units in the time domain. The "time unit" in the embodiments of the present disclosure indicates a slot, a sub-frame, or other time units, which is not limited in the present disclosure. For the "time unit" herein, reference may also be made to the explanation, which is not described again. Illustratively, the first resource corresponds to N contiguous slots in the time domain, and N is an integer greater than 1.

In some embodiments, the first resource corresponding to the N consecutive time units in the time domain means that the first resource corresponds to N consecutive physical time units in the time domain. Using the time unit being the slot as an example, the first resource corresponds to N contiguous physical slots in the time domain.

In some embodiments, the first resource corresponding to the N consecutive time units in the time domain means that the first resource corresponds to N consecutive time units belonging to a resource pool in the time domain. The time unit belonging to the resource pool is also referred to as a logical time unit. That is, the first resource corresponds to N consecutive logical time units in the time domain. Using the time unit being the slot as an example, the first resource corresponds to N contiguous slots belonging to the resource pool in the time domain, or, the first resource corresponds to N contiguous logical slots in the time domain.

It should be noted that in the case that the time units in the resource pool are consecutive physical time units in the time domain, N consecutive time units belonging to the resource pool corresponding to the first resource in the time domain are N consecutive physical time units, and in the case that the time units in the resource pool are non-consecutive physical time units in the time domain, N consecutive time units belonging to the resource pool corresponding to the first resource in the time domain may be N non-consecutive physical time units.

In addition, N is configured on the network, preconfigured, configured by the higher layer of the terminal device for the physical layer, determined based on practice of the terminal device, or a value predefined in the standard. In some embodiments, N is determined based on at least one of a COT duration, a remaining COT duration, a channel access priority, a priority of data transmission, a channel busy ratio (CBR), or a remaining delay budget. In some embodiments, N is contained in resource pool configuration.

In some embodiments, the first resource corresponds to U contiguous sub-channels or IRBs in a frequency domain. Each of the U contiguous sub-channels includes one or more contiguous IRBs, and U is a positive integer. In the case that U is equal to 1, the first resource corresponds to one sub-channel or IRB in the frequency domain. In the case that U is greater than or equal to 2, the first resource corresponds to U contiguous sub-channels or IRBs in the frequency domain. Illustratively, the U contiguous sub-channels or IRBs are within a same resource block set. In some embodiments, U is configured on the network, preconfigured, configured by the higher layer of the terminal device for the physical layer, determined based on practice of the terminal device, or a value predefined in the standard.

In some embodiments, the terminal device performs the resource exclusion by following processes 1 to 3.

1. A resource selection window and a resource sensing window are determined.

In some embodiments, the resource selection window is $[n+T_1, n+T_2]$, and the resource sensing window is $[n-T_0, n-T_{proc,0})$. n is a time unit where the terminal device triggers the resource selection or the resource reselection, or a time unit where the higher layer triggers the physical layer to report time units of the candidate resource set. $T_1$, $T_2$, $T_0$, and $T_{proc,0}$ are predefined values, and reference may be made to above description for details.

2. An initialized first resource set is determined, wherein the initialized first resource set includes at least one first resource within the resource selection window.

Illustratively, the above first resource set is denoted as the resource set A, and the resource set A includes resources within the resource selection window. In some embodiments, all first resources within the resource selection window are initialized as the resource set A. That is, any resource within the resource set A is denoted as the first resource. Illustratively, the first resource is a resource R(x,y). x represents a frequency domain position of the first resource, and y represents a time domain position of the first resource. In some embodiments, x represents a frequency domain start position of the first resource, and y represents a time domain start position of the first resource. Illustratively, using the time unit being the slot as an example, the resource R(x,y) represents N contiguous slots from the slot y, and time-frequency resources corresponding to U contiguous sub-channels or IRBs starting from the sub-channel or IRB x. In some embodiments, the number of first resources within the initialized resource set A is $M_{total}$.

3. The resource exclusion is performed on the first resource set by a resource exclusion process, wherein the resource exclusion process includes at least one of a first exclusion process or a second exclusion process, wherein the first exclusion process is configured to perform resource exclusion based on a non-monitored time unit within the resource sensing window, and the second exclusion process is configured to perform resource exclusion based on first sidelink control information sensed within the resource sensing window.

In some embodiments, the first exclusion process includes: determining Q1 time units corresponding to the non-monitored time unit based on the non-monitored time unit and each resource reservation period in the resource reservation period set configured in the resource pool or in sub-sets of the resource reservation period set, wherein Q1 is a positive integer; and excluding the first resource from the resource set in the case that the Q1 time units are overlapped with the first resource within the resource set or overlapped with a resource corresponding to the first resource. Illustratively, the resource reservation period set or the subsets of the resource reservation period set is configured on the network, preconfigured, or determined based on practice of the terminal device. Illustratively, the resource corresponding to the first resource is periodic resources with a same frequency domain position as the first resource and having a fixed time interval with the first resource in the time domain position. In some embodiments, the resource corresponding to the first resource includes the first resource. In some embodiments, the fixed time interval is determined based on the resource reservation period of the terminal device. In some embodiments, the terminal device does not perform the first exclusion process, that is, not perform the process of the resource exclusion on the resource set A based on the non-monitored time unit within the resource sensing window.

In some embodiments, the second exclusion process includes excluding the first resource from the resource set in the case that a resource indicated in the first sidelink control information is overlapped with the first resource within the resource set or overlapped with the resource corresponding to the first resource and meets the RSRP threshold condition.

In some embodiments, the second exclusion process includes determining Q2 time units corresponding to a first time unit based on the first time unit where the first sidelink control information is sensed and the resource reservation period indicated in the first sidelink control information, and assuming that the first sidelink control information with same content is to be received within the Q2 time units, wherein Q2 is a positive integer; and excluding the first resource from the resource set in the case that a resource indicated in the first sidelink control information that is sensed and assumed to be received is overlapped with the first resource within the resource set or overlapped with a resource corresponding to the first resource and meets the RSRP threshold condition.

In some embodiments, the RSRP threshold condition includes the RSRP of the PSCCH corresponding to the first sidelink control information or the RSRP of the PSSCH scheduled by the PSCCH being greater than the RSRP threshold.

In some embodiments, the resource indicated in the first sidelink control information is a resource determined based on at least one of following indication fields:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission. The transmission round can be considered as a position of the resource in the B2B transmission, the number of transmissions of the resource in the B2B transmission, and the like. Illustratively, the fourth indication field indicates a position of the resource corresponding to the first sidelink control information or a resource for transmitting the first sidelink control information in the B2B transmission or the number of transmissions the resources corresponding to the first sidelink control information or a resource for transmitting the first sidelink control information in the B2B transmission.

In some embodiments, the resource indicated in the first sidelink control information is a resource of one or more single time units. For example, the resource indicated in the first sidelink control information is a resource of one or more single slots.

In some embodiments, the resource indicated in the first sidelink control information is one or more B2B transmission sets. The B2B transmission set is a resource of a set of consecutive single time units. For example, the B2B transmission set is a resource of a set of contiguous single slots.

In some embodiments, upon exclusion of the first resource from the resource set A by the resource exclusion process, the RSRP threshold is raised by H dB in the case that the number of remaining first resources within the resource set A is less than $Z*M_{total}$, the resource set A is initialized, and the first resource within the resource set A is excluded by reperforming the resource exclusion process, the resource exclusion process is not performed on the resource set A in the case that the number of remaining first resources within the resource set A is greater than or equal to $Z*M_{total}$, that is, the resource exclusion process is not required for the first resource set (or, the resource exclusion process on the first resource set is terminated). $M_{total}$ is a total number of first resources within the initialized resource set A, and Z and H are predefined values. Z and H are configured on the network, preconfigured, determined based on practice of the terminal device, or a value predefined in the standard. The terminal device selects the transmission resource from the resource set A (or referred to as the candidate resource set) upon resource exclusion. In some embodiments, the transmission resource is selected randomly.

In the technical solutions according to the embodiments, the resources within the resource set are resources corresponding to a plurality of consecutive time units in the time domain, such that the candidate resource set acquired by performing the resource exclusion on the resource set includes the contiguous resources in the time domain. Thus, the terminal device selects the contiguous resources in the time domain in selecting the transmission resources from the candidate resource set, such that the B2B transmission is supported, the utilization rate of COT is improved, and SL-U users are enabled to contend for channels.

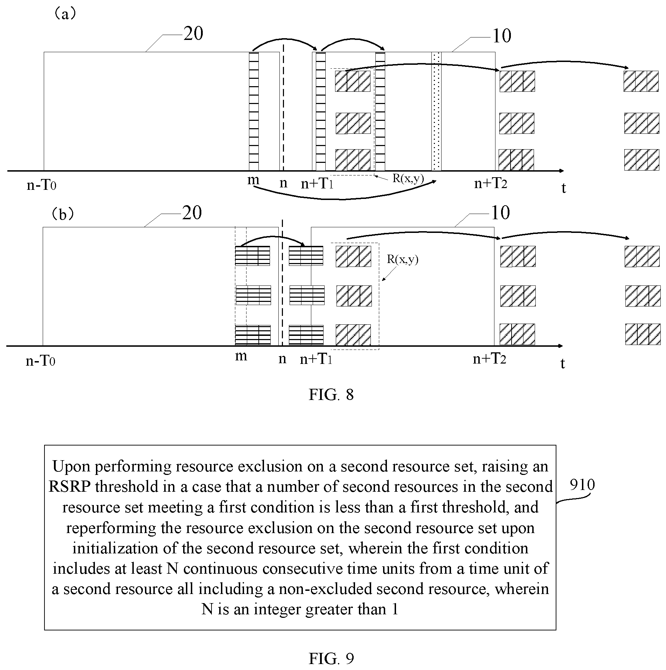

For example, as shown in FIG. 8, the terminal device determines a resource selection window 10 from $n+T_1$ to $n+T_2$ and a resource sensing window 20 from $n-T_0$ to $n-T_{proc,0}$ (not including $n-T_{proc,0}$), and determines any resource corresponding to three slots in the time domain and one sub-channel in the frequency domain within the resource selection window 10 as the resource R(x,y). x represents a frequency domain start position of the resource R(x,y), and y represents a time domain start position of the resource R(x,y). The resource R(x,y) shown in FIG. 8 corresponds to one sub-channel in the frequency domain, one sub-channel corresponds to one IRB, and one IRB includes three PRBs in the embodiments.

All resources R(x,y) within the resource selection window 10 are initialized as the resource set A, and the number of resources R(x,y) within the initialize resource set A is denoted as $M_{total}$. The exclusion is performed on the resource set A based on the non-monitored slot and/or the sensed sidelink control information.

The exclusion is performed on the resource set A based on the non-monitored slot. As shown in FIG. 8(a), the terminal device does not perform sensing in the slot m, but performs resource exclusion based on each resource reservation period in the resource reservation period set M configured in the resource pool used by the terminal device. For the resource reservation period 1, assuming that Q is calculated as 2, then the corresponding Q slots are two following slots mapped from the slot m in FIG. 8(a) as indicated by horizontal line shadow, having the resource reservation period 1 as an interval. For a resource reservation period 2, assuming that the Q value is calculated as 1, then the corresponding Q slots are one following slot mapped from the slot m in FIG. 8(a) as indicated by dotted shadow, having the resource reservation period 2 as an interval. In the case that the corresponding Q slots determined based on the non-monitored slot by the terminal device are overlapped with the resource R(x,y) or the resource corresponding to the resource R(x,y), the resource R(x,y) is excluded from the resource set A.

The exclusion is performed on the resource set A based on the sensed sidelink control information. As shown in FIG. 8(b), the terminal device senses the sidelink control information in the slot m. The sidelink control information indicates the resource indicated by horizontal line shadow or two B2B sets. In the case that the resource indicated in the sidelink control information is overlapped with the resource R(x,y) or the resource corresponding to the resource R(x,y), and the RSRP of the PSCCH corresponding to the sidelink control information or the RSRP of the PSSCH scheduled by the PSCCH is greater than the RSRP threshold, the resource R(x,y) is excluded from the resource set A.

The resource corresponding to the resource R(x,y) is periodic resources with a same frequency domain position as the resource R(x,y) and having a fixed time interval with the resource R(x,y) in a time domain position. The fixed time interval is determined based on the resource reservation period of the terminal device, and the resource corresponding to the resource R(x,y) includes the resource R(x,y). For example, in FIG. 8, the resource corresponding to the resource R(x,y) is three transmission resources corresponding to the resource R(x,y).

In the case that the number of resources R(x,y) in the resource set A upon the resource exclusion is less than $Z*M_{total}$, the resource set A is initialized, the RSRP threshold is raised by 3 dB, and the resource exclusion based on the non-monitored slot and/or the sensed sidelink control information is reperformed until the number of remaining resources R(x,y) in the resource set A upon the resource exclusion is greater than or equal to $Z*M_{total}$. The transmission resource is randomly selected from the resource set A upon the resource exclusion.

Referring to FIG. 9, a flowchart of a method for resource exclusion according to some embodiments of the present disclosure is illustrated. The method is applicable to the network architecture shown in FIG. 1, such as a terminal device. The method includes following processes.

In S910, upon resource exclusion on a second resource set, an RSRP threshold is raised in the case that the number of second resources within the second resource set meeting a first condition is less than a first threshold, and the resource exclusion is reperformed on the second resource set upon initialization of the second resource set, wherein the first condition includes at least N consecutive time units from a time unit of a second resource all including a non-excluded second resource, wherein N is an integer greater than 1.

In the embodiments of the present disclosure, the second resource is a resource of a single time unit. That is, the second resource corresponds to one time unit in the time domain. The "time unit" in the embodiments of the present disclosure indicates a slot, a sub-frame, or other time units, which is not limited in the present disclosure. For the "time unit" herein, reference may also be made to the explanation, which is not described again. Illustratively, the second resource only corresponds to one slot, and is also referred to as a single slot resource.

In some embodiments, the RSRP threshold is raised in the case that the number of second resources within the second resource set meeting the first condition is less than the first threshold and the number of remaining second resources within the second resource set meeting a second threshold, and the resource exclusion is reperformed on the second resource set upon initialization of the second resource set.

In some embodiments, the at least N consecutive time units are at least N consecutive physical time units. Using the time unit being the slot as an example, the at least N consecutive time units are at least N contiguous physical slots.

In some embodiments, the at least N consecutive time units are at least N consecutive time units belonging to a resource pool. The time unit belonging to the resource pool is also referred to as a logical time unit, that is, the at least N consecutive logical time units. Using the time unit being the slot as an example, the at least N consecutive time units are at least N contiguous slots belonging to the resource pool or at least N contiguous logical slots.

It should be noted that in the case that the time units in the resource pool are consecutive physical time units in the time domain, the at least N consecutive time units belonging to the resource pool are at least N consecutive physical time units; and in the case that the time units in the resource pool are non-consecutive physical time units in the time domain, the at least N consecutive time units belonging to the resource pool may be at least N non-consecutive physical time units.

In some embodiments, the first condition includes N consecutive time units from a time unit of a second resource all including a non-excluded second resource. In some embodiments, N is configured on the network, preconfigured, configured by the higher layer of the terminal device for the physical layer, determined based on practice of the terminal device, or a value predefined in the standard.

In some embodiments, the second resource corresponds to U contiguous sub-channels or IRBs in the frequency domain. Each of the U contiguous sub-channels includes one or more contiguous IRBs, and U is a positive integer. In the case that U is equal to 1, the second resource corresponds to one sub-channel or IRB in the frequency domain. In the case that U is greater than or equal to 2, the second resource corresponds to U contiguous sub-channels or IRBs in the frequency domain. Illustratively, the U contiguous sub-channels or IRBs are within a same resource block set. In some embodiments, U is configured on the network, preconfigured, configured by the higher layer of the terminal device for the physical layer, determined based on practice of the terminal device, or a value predefined in the standard.

In some embodiments, the terminal device performs the resource exclusion by following processes 1 to 3.

1. A resource selection window and a resource sensing window are determined.

In some embodiments, the resource selection window is $[n+T_1, n+T_2]$, and the resource sensing window is $[n-T_0, n-T_{proc,0})$. n is a time unit where the terminal device triggers the resource selection or the resource reselection, or a time unit where the higher layer triggers the physical layer to report time units of the candidate resource set. $T_1$, $T_2$, $T_0$, and $T_{proc,0}$ are predefined values, and reference may be made to above description for details.

2.An initialized second resource set is determined, wherein the initialized second resource set includes at least one second resource within the resource selection window.

Illustratively, the above second resource set is denoted as the resource set A, and the resource set A includes all available resources within the resource selection window. In some embodiments, the available resource is a resource of a single time unit, for example, a resource of a single slot. Illustratively, the available resource is a resource in the resource pool. In some embodiments, all second resources within the resource selection window are initialized as the resource set A. That is, any resource within the resource set A is denoted as the second resource, and the second resource is a resource of a single time unit. Illustratively, the second resource is a resource R(x,y). x represents a frequency domain position of the second resource, and y represents a time domain position of the second resource. In some embodiments, y represents a time domain start position of the second resource. Illustratively, the resource R(x,y) represents U contiguous sub-channels or IRBs from the sub-channel or IRB x in the slot y. In some embodiments, the number of second resources within the initialized resource set A is $M_{total}$.

3. The resource exclusion is performed on the second resource set by a resource exclusion process, wherein the resource exclusion process includes at least one of a first exclusion process or a second exclusion process, wherein the first exclusion process is configured to perform resource exclusion based on a non-monitored time unit within the resource sensing window, and the second exclusion process is configured to perform resource exclusion based on first sidelink control information sensed within the resource sensing window.

In some embodiments, the first exclusion process includes: determining Q1 time units corresponding to the non-monitored time unit based on the non-monitored time unit and each resource reservation period in the resource reservation period set configured in the resource pool or in the sub-sets of the resource reservation period set, wherein Q1 is a positive integer; and excluding the second resource from the second resource set in the case that the Q1 time units are overlapped with the second resource within the second resource set or overlapped with the resource corresponding to the second resource. Illustratively, the resource reservation period set or the subsets of the resource reservation period set is configured on the network, preconfigured, or determined based on practice of the terminal device. Illustratively, the resource corresponding to the second resource is periodic resources with a same frequency domain position as the second resource and having a fixed time interval with the second resource in the time domain position. In some embodiments, the resource corresponding to the second resource includes the second resource. In some embodiments, the fixed time interval is determined based on the resource reservation period of the terminal device. In some embodiments, the terminal device does not perform the first exclusion process, that is, not perform the process of the resource exclusion on the resource set A based on the non-monitored time unit within the resource sensing window.

In some embodiments, the second exclusion process includes excluding the second resource from the second resource set in the case that a resource indicated in the first sidelink control information is overlapped with the second resource within the second resource set or overlapped with the resource corresponding to the second resource and meets the RSRP threshold condition.

In some embodiments, the second exclusion process includes determining Q2 time units corresponding to the first time unit based on the first time unit where the first sidelink control information is sensed and the resource reservation period indicated in the first sidelink control information, and assuming that the first sidelink control information with same content is to be received within the Q2 time units, wherein Q2 is a positive integer; and excluding the second resource from the second resource set in the case that the resource indicated in the first sidelink control information that is sensed and assumed to be received is overlapped with the second resource within the second resource set or overlapped with the resource corresponding to the second resource and meets the RSRP threshold condition.

In some embodiments, the RSRP threshold condition includes the RSRP of the PSCCH corresponding to the first sidelink control information or the RSRP of the PSSCH scheduled by the PSCCH being greater than the RSRP threshold.

In some embodiments, the resource indicated in the first sidelink control information is a resource determined based on at least one of following indication fields:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission. The transmission round can be considered as a position of the resource in the B2B transmission, the number of transmissions of the resource in the B2B transmission, and the like. Illustratively, the fourth indication field indicates the position of the resource corresponding to the first sidelink control information or the resource for transmitting the first sidelink control information in the B2B transmission or the number of transmissions the resources corresponding to the first sidelink control information or the resource for transmitting the first sidelink control information in the B2B transmission.

In some embodiments, the resource indicated in the first sidelink control information is the resource of one or more single time units. For example, the resource indicated in the first sidelink control information is the resource of one or more single slots.

In some embodiments, the resource indicated in the first sidelink control information is one or more B2B transmission sets. The B2B transmission set is a resource of a set of consecutive single time units. For example, the B2B transmission set is a resource of a set of contiguous single slots.

In some embodiments, upon exclusion of the second resource from the second resource set by the resource exclusion process, the RSRP threshold is raised by H dB in the case that the second resource set upon the resource exclusion meets a condition 1 and/or a condition 2, the second resource set is initialized, and the second resource is excluded from the second resource set by reperforming the resource exclusion process; or, the second resource set upon the resource exclusion is determined as an acquired second resource set (or referred to as the candidate resource set) in the case that the resource set upon the resource exclusion does not meet the condition 1 and/or the condition 2. The condition 1 includes the number of remaining second resources within the second resource set being less than a second threshold, and the condition 2 includes the number of second resources meeting a first condition within the second resource set being less than a first threshold. The first condition is described above.

In some embodiments, upon exclusion of the second resource from the second resource set by the resource exclusion process, the RSRP threshold is raised by H dB in the case that the second resource set upon the resource exclusion meets the condition 1, the second resource set is initialized, and the second resource is excluded from the second resource set by reperforming the resource exclusion process; or, the second resource set upon the resource exclusion is determined as the acquired second resource set in the case that the resource set upon the resource exclusion does not meet the condition 1. The condition 1 is described above.

In some embodiments, upon exclusion of the second resource from the second resource set by the resource exclusion process, the RSRP threshold is raised by H dB in the case that the second resource set upon the resource exclusion meets the condition 2, the second resource set is initialized, and the second resource is excluded from the second resource set by reperforming the resource exclusion process; or, the second resource set upon the resource exclusion is determined as the acquired second resource set in the case that the resource set upon the resource exclusion does not meet the condition 2. The condition 2 is described above.

In some embodiments, upon exclusion of the second resource from the second resource set by the resource exclusion process, the RSRP threshold is raised by H dB in the case that the second resource set upon the resource exclusion meets at least one of the condition 1 or the condition 2, the second resource set is initialized, and the second resource is excluded from the second resource set by reperforming the resource exclusion process; or, the second resource set upon the resource exclusion is determined as the acquired second resource set in the case that the resource set upon the resource exclusion does not meet the condition 1 and the condition 2. The condition 1 and the condition 2 are described above. In the embodiments, the initiation is reperformed and the resource exclusion process is reperformed in the case that the second resource set meets at least one of the condition 1 or the condition 2, such that the acquired second resource set includes sufficient resources and a sufficient number of contiguous resources.

Illustratively, using the time unit being the slot as an example, the first condition is that at least N contiguous slots within a same resource block set from a slot of the resource $R(x,y)$ include non-excluded or remaining resources $R(x,y)$. Illustratively, the first condition is that N contiguous slots within a same resource block set from the time unit of the resource $R(x,y)$ all include a non-excluded resource $R(x,y)$. In some embodiments, the second resources in the at least N consecutive time units (or N consecutive time units) are within a same resource block set. In some embodiments, frequency domain positions of the second resources within the at least N consecutive time units (or N consecutive time units) are the same or different. Illustratively, frequency domain positions of resources $R(x,y)$ within the at least N contiguous slots (or N contiguous slots) are the same. Illustratively, frequency domain positions of resources $R(x,y)$ within the at least N contiguous slots (or N contiguous slots) are different.

In some embodiments, the first threshold is configured on the network, preconfigured, configured by the higher layer of the terminal device for the physical layer, determined based on practice of the terminal device, or a value predefined in the standard. In some embodiments, the first threshold is determined based on at least one of a COT duration, a remaining COT duration, a channel access priority, a priority of data transmission, a CBR, or a remaining delay budget. Illustratively, the first threshold is equal to $Z*M_{total}$. Z is configured on the network, preconfigured, configured by the higher layer of the terminal device for the physical layer, determined based on practice of the terminal device, or a value predefined in the standard.

In some embodiments, the second threshold is configured on the network, preconfigured, configured by the higher layer of the terminal device for the physical layer, determined based on practice of the terminal device, or a value predefined in the standard. Illustratively, the second threshold is equal to $X*M_{total}$. X is configured on the network, preconfigured, configured by the higher layer of the terminal device for the physical layer, determined based on practice of the terminal device, or a value predefined in the standard.

The second resource set upon the resource exclusion is denoted as the candidate resource set, and the terminal device selects the transmission resource from the candidate resource set. In some embodiments, the terminal device prioritizes selecting contiguous resources in the time domain from the candidate resource set as the transmission resources.

In the technical solutions according to the embodiments, in the resource exclusion process, the number of contiguous resources in the time domain are within the candidate resource set acquired by the resource exclusion, such that the terminal device selects the contiguous resources in the time domain in selecting the transmission resources from the candidate resource set. Thus, the B2B transmission is supported, the utilization rate of COT is improved, and SL-U users are facilitated to contend for channels.

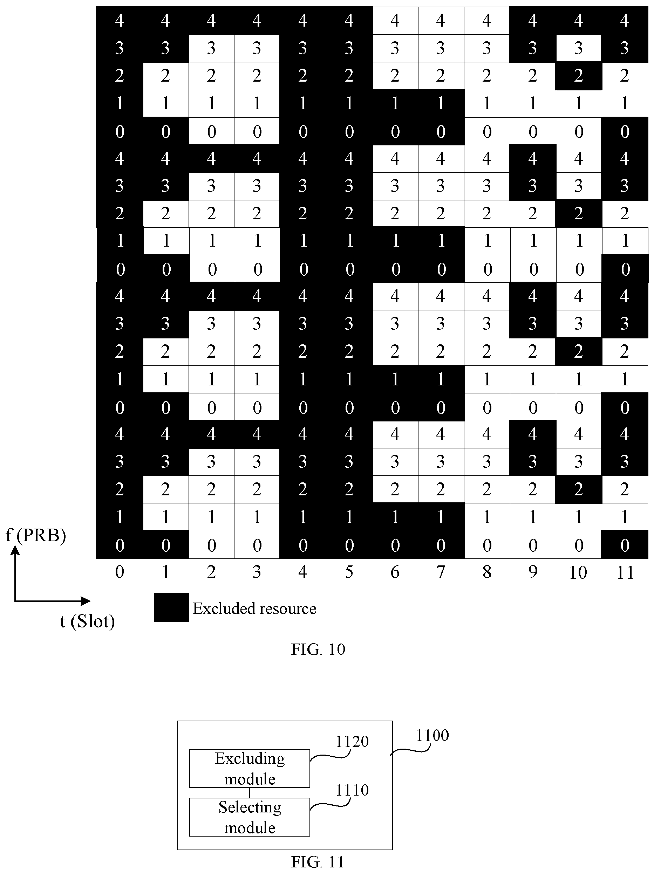

Illustratively, as shown in FIG. 10, one sub-channel in FIG. 10 corresponds to one IRB (that is, each of 0, 1, 2, 3, and 4 in the frequency domain in the drawing represents one IRB). Assuming that resources $R(x,y)$ are resources corresponding to two contiguous sub-channels (that is, U is equal to 2) from the sub-channel x in the frequency domain within the slot y, for example, R (0, 0) represents resources corresponding to the sub-channels 0 and 1 within the slot 0, and R (0, 1) represents resources corresponding to the sub-channels 0 and 1 within the slot 1, then the resource set A is initialized as all resources $R(x,y)$ within the slots 0 to 11, and the number of resources $R(x,y)$ within the initialized resource

set A is $M_{total}$. The resource exclusion based on the non-monitored slot and/or the sensed sidelink control information is performed on the resource set A, and remaining resources upon exclusion are shown in FIG. 10, which including R(1,1), R(0,2), R(1,2), R(2,2)... R(2,6), R(3,6), R(2,7), ... , R(1,11).

It is assumed that N configured by the higher layer for the physical layer is 2, the higher layer configures the parameter Z for the physical layer, and the first threshold is $Z*M_{total}$.

In the case that the resource set A upon the resource exclusion meets at least one of the condition 1 or the condition 2, the RSRP threshold is raised by 3 dB, the resource set A is initialized, and the resource exclusion is reperformed on the resource set A.

The condition 1 is that the number of remaining resources R(x,y) within the resource set A is less than $X*M_{total}$.

The condition 2 is that the number of remaining resources R(x,y) meeting the first condition within the resource set A is less than $Z*M_{total}$.

Assuming that the first condition is that N contiguous slots starting from a slot of a resource R(x,y) all include a non-excluded or remaining resources R(x,y), and frequency positions of remaining resources R(x,y) in the N slots are the same, then the remaining resources R(x,y) meeting the condition in FIG. 10 includes R(1,1), R(0,2), R(1,2), R(2,2), R(2,6), R(3,6), R(2,7), R(3,7), R(0,8), R(1,8), R(0,9).

Assuming that the firs condition is that N contiguous slots starting from a slot of a resource R(x,y) all include a non-excluded or remaining resources R(x,y), and frequency positions of remaining resources R(x,y) in the N slots are the same or different, then the remaining resources R(x,y) meeting the condition in FIG. 10 includes R(1,1), R(0,2), R(1,2), R(2,2), R(2,6), R(3,6), R(2,7), R(3,7), R(0,8), R(1,8), R(2,8), R(3,8), R(0,9), R(1,9), R(0,10), R(3,10), R(1,11).

The terminal device reports the resource set A upon the resource exclusion to the higher layer, and the higher layer selects resources from the resource set A.

In some embodiments, the terminal device initializes the resource set A as all available resources within the resource selection window, and performs the resource exclusion on the resource set A based on the non-monitored time unit and/or the monitored sidelink control information. For detailed processes, reference may be made to above description. The terminal device selects the transmission resource from the resource set A (or referred to as the candidate resource set) upon the resource exclusion.

In the case that the terminal device selects the transmission resource from the candidate resource set, the terminal device prioritizes selecting contiguous time-frequency resources in the time domain as the transmission resources. Illustratively, the terminal device prioritizes selecting contiguous time-frequency resources in the time domain in randomly selecting the transmission resource from the resource set A. Illustratively, in the case that the terminal device selects a TB 1 for initial transmission and retransmission, the initial transmission and the retransmission of the TB 1 occupy contiguous slots. Illustratively, in the case that the terminal device has selected the transmission resource for a TB 2, the transmission resources of the TB 1 and the TB 2 occupy contiguous slots in selection of the transmission resource of the TB 1. In some embodiments, the contiguous slots are contiguous slots in the resource pool. In addition, the TB 1 and the TB 2 are two different transmission blocks.

For example, the candidate resource set reported by the physical layer of the terminal device to the higher layer includes R(1,1), R(0,2), R(1,2), R(2,2), R(2,6), R(3,6), R(2,7), R(3,7), R(0,8), R(1,8), R(0,9). The TB 1 corresponds to three transmissions, that is, one initial transmission and two retransmissions, and the higher layer of the terminal device selects the resources R(2,6), R(2,7), R(0,8) for transmission of the TB 1.

For example, the candidate resource set reported by the physical layer of the terminal device to the higher layer includes R(1,1), R(0,2), R(1,2), R(2,2), R(2,6), R(3,6), R(2,7), R(3,7), R(0,8), R(1,8), R(0,9). The transmission resources of the TB 2 determined by the terminal device are within the slots 1, 6, and 8. The TB 1 corresponds to three transmissions, that is, one initial transmission and two retransmissions, and the higher layer of the terminal device selects the resources R(1,2), R(2,7), R(0,9) for transmission of the TB 1.

In the technical solutions according to the embodiments, the contiguous resources in the time domain are prioritized in selection of the transmission resource from the candidate resource set upon the resource exclusion, such that the B2B transmission is supported, the utilization rate of COT is improved, and SL-U users are facilitated to contend for channels.

The following are apparatus embodiments of the present disclosure, which may be used to implement the method embodiments of the present disclosure. For details not disclosed in the apparatus embodiments of the present disclosure, reference may be made to the method embodiments of the present disclosure.

Referring to FIG. 11, a block diagram of an apparatus for resource selection according to some embodiments of the present disclosure is illustrated. The apparatus has the function of implementing the above embodiments of the method for resource selection, and the function may be achieved by hardware or by hardware executing corresponding software. The apparatus may be the terminal device mentioned above or may be provided in the terminal device. As shown in FIG. 11, the apparatus 1100 includes: a selection module 1110.

The selection module 1110 is configured to select a transmission resource from a first resource set after resource exclusion on the first resource set; wherein any resource within the first resource set is a first resource, wherein the first resource corresponds to N consecutive time units in a time domain, N being an integer greater than 1.

In some embodiments, the first resource corresponding to the N consecutive time units in the time domain includes following cases: the first resource corresponds to N consecutive physical time units in the time domain; or the first resource corresponds to N consecutive time units belonging to a resource pool in the time domain.

In some embodiments, the first resource corresponds to U contiguous sub-channels or IRBs in a frequency domain, wherein each of the U contiguous sub-channels includes one or more contiguous IRBs, and U is a positive integer.

In some embodiments, the U contiguous sub-channels or IRBs are within a same resource block set.

In some embodiments, as shown in FIG. 11, the apparatus 1100 further includes an excluding module, configured to:

determine a resource selection window and a resource sensing window;
determine an initialized first resource set, wherein the initialized first resource set includes at least one first resource within the resource selection window; and
perform the resource exclusion on the initialized first resource set by a resource exclusion process, wherein the resource exclusion process includes at least one of a first exclusion process or a second exclusion process, wherein the first exclusion process is configured to perform the resource exclusion based on a non-monitored time unit within the resource sensing window, and the second exclusion process is configured to perform the resource exclusion based on first sidelink control information monitored within the resource sensing window.

In some embodiments, the first exclusion process includes:

determining Q1 time units corresponding to the non-monitored time unit based on the non-monitored time unit and each resource reservation period within a resource reservation period set configured in a resource pool or in sub-sets of a resource reservation period set, wherein Q1 is a positive integer; and
excluding the first resource from the first resource set in a case that the Q1 time units are overlapped with the first resource within the first resource set or overlapped with a resource corresponding to the first resource.

In some embodiments, the second exclusion process includes:

excluding the first resource from the first resource set in a case that a resource indicated in the first sidelink control information is overlapped with the first resource within the first resource set or overlapped with a resource corresponding to the first resource and meets an RSRP threshold condition; or
determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the first resource from the first resource set in a case that a resource indicated in the first sidelink control information that is monitored and assumed to be received is overlapped with the first resource within the first resource set or overlapped with a resource corresponding to the first resource and meets an RSRP threshold condition.

In some embodiments, the resource indicated in the first sidelink control information is a resource determined based on at least one of following indication fields:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission.

In some embodiments, the resource indicated in the first sidelink control information is a resource of one or more single time units or one or more B2B transmission sets.

In some embodiments, the resource corresponding to the first resource is periodic resources with a same frequency domain position as the first resource and having a fixed time interval with the first resource in a time domain position.

In some embodiments, N is determined based on at least one of a COT duration, a remaining COT duration, a channel access priority, a priority of data transmission, a CBR, or a remaining delay budget.

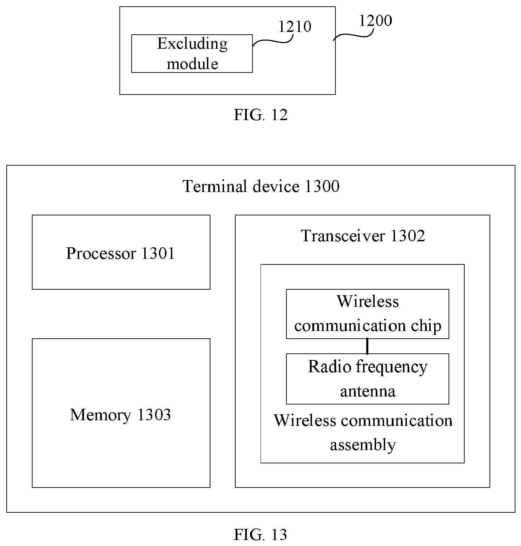

Referring to FIG. 12, a block diagram of an apparatus for resource exclusion according to some embodiments of the present disclosure is illustrated. The apparatus has the function of implementing the above embodiments of the method for resource selection, and the function may be achieved by hardware or by hardware executing corresponding software. The apparatus may be the terminal device mentioned above or may be provided in the terminal device. As shown in FIG. 12, the apparatus 1200 includes: an excluding module 1200.

The excluding module 1200 is configured to: upon performing resource exclusion on a second resource set, raise an RSRP threshold in a case that the number of second resources within the second resource set meeting a first condition is less than a first threshold, and reperform the resource exclusion on the second resource set upon initialization of the second resource set, wherein the first condition includes at least N consecutive time units from a time unit of a second resource all including a non-excluded second resource, wherein N is an integer greater than 1.

In some embodiments, the second resource is a resource of a single time unit.

In some embodiments, the second resource corresponds to U contiguous sub-channels or IRBs in a frequency domain, wherein each of the U contiguous sub-channels includes one or more contiguous IRBs, and U is a positive integer.

In some embodiments, the U contiguous sub-channels or IRBs are within a same resource block set.

In some embodiments, the excluding module 1210 is further configured to raise the RSRP threshold in a case that the number of second resources within the second resource set meeting the first condition is less than the first threshold and the number of remaining second resources within the second resource set meeting a second threshold, and reperform the resource exclusion on the second resource set upon initialization of the second resource set.

In some embodiments, the at least N consecutive time units are at least N consecutive physical time units or at least N consecutive time units belonging to a resource pool.

In some embodiments, the excluding module 1200 is further configured to:

determine a resource selection window and a resource sensing window;
determine an initialized second resource set, wherein the initialized second resource set includes at least one second resource within the resource selection window; and
perform the resource exclusion on the initialized second resource set by a resource exclusion process, wherein the resource exclusion process includes at least one of a first exclusion process or a second exclusion process, wherein the first exclusion process is configured to perform the resource exclusion based on a non-monitored time unit within the resource sensing window, and the second exclusion process is configured to perform the resource exclusion based on first sidelink control information monitored within the resource sensing window.

In some embodiments, the first exclusion process includes:

determining Q1 time units corresponding to the non-monitored time unit based on the non-monitored time unit and each resource reservation period within a resource reservation period set configured in a resource pool or in sub-sets of a resource reservation period set, wherein Q1 is a positive integer; and
excluding the second resource from the initialized second resource set in a case that the Q1 time units are overlapped with the second resource within the initialized second resource set or overlapped with a resource corresponding to the second resource.

In some embodiments, the second exclusion process includes:

excluding the second resource from the initialized second resource set in a case that a resource indicated in the first sidelink control information is overlapped with the second resource within the initialized second resource set or overlapped with a resource corresponding to the second resource and meets an RSRP threshold condition; or
determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the second resource from the initialized second resource set in a case that a resource indicated in the first sidelink control information that is monitored and assumed to be received is overlapped with the second resource within the initialized second resource set or overlapped with a resource corresponding to the second resource and meets an RSRP threshold condition.

In some embodiments, the resource indicated in the first sidelink control information is a resource determined based on at least one of following indication fields:

a first indication field, indicating a time domain position of the resource;
a second indication field, indicating a frequency domain position of the resource;
a third indication field, indicating whether the resource is transmitted by B2B transmission; or
a fourth indication field, indicating a transmission round of B2B transmission.

In some embodiments, the resource indicated in the first sidelink control information is a resource of one or more single time units or one or more B2B transmission sets.

In some embodiments, the resource corresponding to the second resource is periodic resources with a same frequency domain position as the second resource and having a fixed time interval with the second resource in a time domain position.

In some embodiments, the first threshold is determined based on at least one of a COT duration, a remaining COT duration, a channel access priority, a priority of data transmission, a CBR, or a remaining delay budget.

It should be noted that, in the case that the apparatus according to the above embodiments implements the functions thereof, the division of the functional modules is merely exemplary. In practice, the above functions may be assigned to and completed by different functional modules according to actual needs, that is, the internal structure of the apparatus may be divided into different functional modules, to implement all or a part of the above functions.

With regard to the apparatus in the above embodiments, the specific manner in which each module performs the operation has been described in detail in the embodiments related to the method and will not be described in detail herein. Reference may be made to the above method embodiments for details that are not specified in the apparatus embodiment.

Referring to FIG. 13, a schematic structural diagram of a terminal device according to some embodiments of the present disclosure is illustrated. The terminal device 1300 includes: a processor 1301, a transceiver 1302, and a memory 1303.

The processor 1301 includes one or more processing cores, and the processor 1301 runs various functional applications and performs information processing by running software programs and modules.

The transceiver 1302 includes a receiver and a transmitter, which are practiced, for example, as the same wireless communication assembly that includes a wireless communication chip and a radio frequency antenna.

The memory 1303 is connected to the processor 1301 and the transceiver 1302.

The memory 1303 may be configured to store one or more computer programs run by the processor, and the processor 1301 is configured to run the one or more computer programs to perform the processes in the above method embodiments.

In some embodiments, the processor 1301 is configured to select a transmission resource from a first resource set after resource exclusion on the first resource set; wherein any resource within the first resource set is a first resource, wherein the first resource corresponds to N consecutive time units in a time domain, N being an integer greater than 1.

In some embodiments, the processor 1301 is configured to: upon performing resource exclusion on a second resource set, raise an RSRP threshold in a case that the number of second resources within the second resource set meeting a first condition is less than a first threshold, and reperform the resource exclusion on the second resource set upon initialization of the second resource set, wherein the first condition includes at least N consecutive time units from a time unit of a second resource all including a non-excluded second resource, wherein N is an integer greater than 1.

Reference is made to the foregoing embodiments for details that are not specified in the embodiments, which are not repeated herein.

In addition, the memory may be implemented by any type or combination of volatile or non-volatile storage devices, including, but not limited to: a magnetic or optical disc, an electrically erasable programmable read-only memory, an erasable programmable read-only memory, a static random-access memory, a read-only memory (ROM), a magnetic memory, a flash memory, and a programmable read-only memory.

The embodiments of the present disclosure further provide a computer-readable storage medium storing one or more computer programs therein. The one or more computer programs, when loaded and run by a processor, cause the processor to perform the method for resource selection or the method for resource exclusion described above. In some embodiments, the computer-readable storage medium includes: a ROM, a random-access memory (RAM), a solid state drive (SSD), an optical disk, etc. The RAM includes a resistance random-access memory (ReRAM) and a dynamic random access memory (DRAM).

The embodiments of the present disclosure further provide a chip including one or more programmable logic circuits and/or one or more program instructions. The chip, when running, is caused to perform the method for resource selection or the method for resource exclusion described above.

The embodiments of the present disclosure further provide a computer program product or a computer program. The computer program product or the computer program includes computer instructions stored in a computer-readable storage medium. The computer instructions, when read from the computer-readable storage medium and executed by a processor, cause the processor to perform the method for resource selection or the method for resource exclusion described above.

It should be understood that the term "indication" mentioned in the embodiments of the present disclosure is a direct indication, an indirect indication, or an indication that there is an association relationship. For example, A indicates B, which may mean that A indicates B directly, e.g., B may be acquired by A; or that A indicates B indirectly, e.g., A indicates C by which B may be acquired; or that an association relationship is present between A and B.

In the description of the embodiments of the present disclosure, the term "correspond" indicates a direct or indirect corresponding relationship between two items, or indicates an associated relationship between the two items. It may also indicate relationships such as indicating and being indicated, or configuring and being configured.

In some embodiments of the present disclosure, the term "predefined" is implemented by pre-storing corresponding codes, tables, or other means that may be defined to indicate related information in devices (including, for example, terminal devices and network devices), and the present disclosure does not limit the specific implementation thereof. For example, "predefined" refers to "defined" in a protocol.

In some embodiments of the present disclosure, the "protocol" refers to a standard protocol in the communication field including, for example, the LTE protocol, the NR protocol, and related protocols applied in future communication systems, which is not limited in the present disclosure.

The mentioned term "a plurality of" herein means two or more. The term "and/or" describes the association relationship between the associated objects, and indicates that three relationships may be present. For example, the phrase "A and/or B" means (A), (B), or (A and B). The symbol "/" generally indicates an "or" relationship between the associated objects.

Reference herein to "greater than or equal to" may indicate greater than or equal to or just greater than, and "less than or equal to" may indicate less than or equal to or just less than.

In addition, serial numbers of the processes described herein only show an exemplary possible sequence of performing the processes. In some other embodiments, the processes may also be performed out of the numbering sequence, for example, two processes with different serial numbers are performed concurrently, or two processes with different serial numbers are performed in a reverse order to the illustrated sequence, which is not limited in the present disclosure.

Those skilled in the art should understand that in one or more of the above embodiments, the functions described in the embodiments of the present disclosure may be implemented in hardware, software, firmware, or any combination thereof. The functions, when implemented in software, may be stored in a computer-readable medium or transmitted as one or more instructions or codes on a computer-readable medium. The computer-readable medium includes a computer storage medium and a communication medium, where the communication medium includes any medium that facilitates the transfer of a computer program from one place to another. The storage medium is any available medium that is accessible by a general-purpose or special-purpose computer.

## Claims

1. A method for resource selection, applicable to a terminal device, comprising:

    determining a resource selection window and a resource sensing window;
    determining an initialized first resource set, wherein the initialized first resource set comprises at least one first resource within the resource selection window;
    performing resource exclusion on the initialized first resource set by a resource exclusion process, wherein the resource exclusion process comprises a second exclusion process, wherein the second exclusion process is configured to perform the resource exclusion based on first sidelink control information monitored within the resource sensing window; and
    selecting (710) a transmission resource from a first resource set after the resource exclusion on the first resource set; wherein any resource within the first resource set is a first resource, wherein the first resource corresponds to N consecutive time units in a time domain, N being an integer greater than 1;
    **characterized in that** the second exclusion process comprises:
    determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the first resource from the first resource set in a case that a resource indicated in the first sidelink control information that is monitored and assumed to be received is overlapped with the first resource within the first resource set or overlapped with a resource corresponding to the first resource and meets an reference signal received power, RSRP, threshold condition.

2. The method according to claim 1, wherein the first resource corresponding to the N consecutive time units in the time domain comprises:

    the first resource corresponding to N consecutive physical time units in the time domain.

3. The method according to claim 1 or 2, wherein the first resource corresponds to U contiguous sub-channels or interlaced resource blocks, IRBs, in a frequency domain, wherein each of the U contiguous sub-channels comprises one or more contiguous IRBs, and U is a positive integer.

4. The method according to claim 3, wherein the U contiguous sub-channels or IRBs are within a same resource block set.

5. The method according to any one of claims 1 to 4, wherein the resource exclusion process further comprises a first exclusion, wherein the first exclusion process is configured to perform the resource exclusion based on a non-monitored time unit within the resource sensing window.

6. The method according to claim 5, wherein the first exclusion process comprises:

determining Q1 time units corresponding to the non-monitored time unit based on the non-monitored time unit and each resource reservation period in a resource reservation period set configured in a resource pool or in sub-sets of a resource reservation period set, wherein Q1 is a positive integer; and
excluding the first resource from the first resource set in a case that the Q1 time units are overlapped with the first resource within the first resource set or overlapped with a resource corresponding to the first resource.

7. The method according to claim 1, wherein the resource indicated in the first sidelink control information is a resource determined based on at least one of following indication fields:

a first indication field, indicating a time domain position of the resource; or
a second indication field, indicating a frequency domain position of the resource.

8. The method according to claim 1 or 7, wherein the resource indicated in the first sidelink control information is a resource of one or more single time units.

9. The method according to any one of claims 6 to 8, wherein the resource corresponding to the first resource is periodic resources with a same frequency domain position as the first resource and having a fixed time interval with the first resource in a time domain position.

10. The method according to any one of claims 1 to 9, wherein N is determined based on at least one of a channel occupancy time, COT, duration, a remaining COT duration, or a channel access priority.

11. A method for resource exclusion, applicable to a terminal device, comprising:

determining a resource selection window and a resource sensing window;
determining an initialized second resource set, wherein the initialized second resource set comprises at least one second resource within the resource selection window;
performing resource exclusion on the initialized second resource set by a resource exclusion process, wherein the resource exclusion process comprises a second exclusion process, wherein the second exclusion process is configured to perform the resource exclusion based on first sidelink control information monitored within the resource sensing window; and
upon performing the resource exclusion on a second resource set, raising (910) a reference signal received power, RSRP, threshold in a case that a number of second resources within the second resource set meeting a first condition is less than a first threshold, and reperforming the resource exclusion on the second resource set upon initialization of the second resource set, wherein the first condition comprises at least N consecutive time units from a time unit of a second resource all comprising a non-excluded second resource, wherein N is an integer greater than 1;
**characterized in that** the second exclusion process comprises:
determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the second resource from the second resource set in a case that a resource indicated in the first sidelink control information that is monitored and assumed to be received is overlapped with the second resource within the second resource set or overlapped with a resource corresponding to the second resource and meets an reference signal received power, RSRP, threshold condition.

12. The method according to claim 11, wherein the second resource corresponds to U contiguous sub-channels or interlaced resource blocks, IRBs, in a frequency domain, wherein each of the U contiguous sub-channels comprises one or more contiguous IRBs, and U is a positive integer.

**13.** The method according to claim 11 or 12, wherein the resource exclusion process further comprises a first exclusion process, wherein the first exclusion process is configured to perform the resource exclusion based on a non-monitored time unit within the resource sensing window.

**14.** An apparatus for resource selection, comprising

a excluding module, configured to: determine a resource selection window and a resource sensing window; determine an initialized first resource set, wherein the initialized first resource set comprises at least one first resource within the resource selection window; and perform resource exclusion on the initialized first resource set by a resource exclusion process, wherein the resource exclusion process comprises a second exclusion process, wherein the second exclusion process is configured to perform the resource exclusion based on first sidelink control information monitored within the resource sensing window; and
a selecting module (1110), configured to select a transmission resource from a first resource set after the resource exclusion on the first resource set; wherein any resource within the first resource set is a first resource, wherein the first resource corresponds to N consecutive time units in a time domain, N being an integer greater than 1;
**characterized in that** the second exclusion process comprises:
determining Q2 time units corresponding to a first time unit based on the first time unit where the first sidelink control information is monitored and a resource reservation period indicated in the first sidelink control information, and assuming that the first sidelink control information with same content is to be received within the Q2 time units, wherein Q2 is a positive integer; and excluding the first resource from the first resource set in a case that a resource indicated in the first sidelink control information that is monitored and assumed to be received is overlapped with the first resource within the first resource set or overlapped with a resource corresponding to the first resource and meets an reference signal received power, RSRP, threshold condition.

**Patentansprüche**

**1.** Verfahren zur Ressourcenauswahl, das auf ein Endgerät anwendbar ist, umfassend:

Bestimmen eines Ressourcenauswahlfensters und eines Ressourcenerkennungsfensters;
Bestimmen einer initialisierten ersten Ressourcenmenge, wobei die initialisierte erste Ressourcenmenge mindestens eine erste Ressource innerhalb des Ressourcenauswahlfensters umfasst;
Ausführen eines Ressourcenausschlusses an der initialisierten ersten Ressourcenmenge durch einen Ressourcenausschlussprozess, wobei der Ressourcenausschlussprozess einen zweiten Ausschlussprozess umfasst, wobei der zweite Ausschlussprozess dazu konfiguriert ist, den Ressourcenausschluss basierend auf ersten Sidelink-Steuerinformationen, die innerhalb des Ressourcenerkennungsfensters überwacht werden, auszuführen; und
Auswählen (710) einer Übertragungsressource aus einer ersten Ressourcenmenge nach dem Ressourcenausschluss an der ersten Ressourcenmenge; wobei eine beliebige Ressource in der ersten Ressourcenmenge eine erste Ressource ist, wobei die erste Ressource N aufeinanderfolgenden Zeiteinheiten in einem Zeitbereich entspricht, wobei N eine Ganzzahl größer als 1 ist;
**dadurch gekennzeichnet, dass** der zweite Ausschlussprozess umfasst:
Bestimmen von Q2 Zeiteinheiten, die einer ersten Zeiteinheit entsprechen, basierend auf der ersten Zeiteinheit, in der die ersten Sidelink-Steuerinformationen überwacht werden, und auf einer Ressourcenbelegungsperiode, die in den ersten Sidelink-Steuerinformationen angegeben wird, und unter der Annahme, dass die ersten Sidelink-Steuerinformationen mit dem gleichen Inhalt innerhalb der Q2 Zeiteinheiten zu empfangen sind, wobei Q2 eine positive Ganzzahl ist; und Ausschließen der ersten Ressource aus der ersten Ressourcenmenge für den Fall, dass sich eine Ressource, die in den ersten Sidelink-Steuerinformationen angegeben wird, die überwacht und als empfangen angenommen werden, mit der ersten Ressource in der ersten Ressourcenmenge überlappt oder sich mit einer Ressource, die der ersten Ressource entspricht und eine Schwellenbedingung einer empfangenen Referenzsignalleistung, RSRP, erfüllt, überlappt.

**2.** Verfahren nach Anspruch 1, wobei die erste Ressource, die den N aufeinanderfolgenden Zeiteinheiten im Zeitbereich entspricht, umfasst:
dass die erste Ressource N aufeinanderfolgenden physikalischen Zeiteinheiten im Zeitbereich entspricht.

3.  Verfahren nach Anspruch 1 oder 2, wobei die erste Ressource U zusammenhängenden Teilkanälen oder verschachtelten Ressourcenblöcken, IRBs, in einem Frequenzbereich entspricht, wobei jeder der U zusammenhängenden Teilkanäle einen oder mehrere zusammenhängende IRBs umfasst, und U eine positive Ganzzahl ist.

4.  Verfahren nach Anspruch 3, wobei sich die U zusammenhängenden Teilkanäle oder IRBs in einer gleichen Ressourcenblockmenge befinden.

5.  Verfahren nach einem der Ansprüche 1 bis 4, wobei der Ressourcenausschlussprozess ferner einen ersten Ausschluss umfasst, wobei der erste Ausschlussprozess dazu konfiguriert ist, den Ressourcenausschluss basierend auf einer nicht überwachten Zeiteinheit innerhalb des Ressourcenerkennungsfensters auszuführen.

6.  Verfahren nach Anspruch 5, wobei der erste Ausschlussprozess umfasst:

    Bestimmen von Q1 Zeiteinheiten, die der nicht überwachten Zeiteinheit entsprechen, basierend auf der nicht überwachten Zeiteinheit und jeder Ressourcenbelegungsperiode in einer Menge von Ressourcenbelegungsperioden, die in einem Ressourcen-Pool oder in Teilmengen einer Menge von Ressourcenbelegungsperioden konfiguriert ist, wobei Q1 eine positive Ganzzahl ist; und
    Ausschließen der ersten Ressource aus der ersten Ressourcenmenge für den Fall, dass sich die Q1 Zeiteinheiten mit der ersten Ressource in der ersten Ressourcenmenge überlappen oder sich mit einer Ressource, die der ersten Ressource entspricht, überlappen.

7.  Verfahren nach Anspruch 1, wobei die Ressource, die in den ersten Sidelink-Steuerinformationen angegeben wird, eine Ressource ist, die basierend auf mindestens einem der folgenden Hinweisfelder angegeben wird:

    einem ersten Hinweisfeld, das eine Zeitbereichsposition der Ressource angibt; oder
    einem zweiten Hinweisfeld, das eine Frequenzbereichsposition der Ressource angibt.

8.  Verfahren nach Anspruch 1 oder 7, wobei die Ressource, die in den ersten Sidelink-Steuerinformationen angegeben wird, eine Ressource von einer oder mehreren einzelnen Zeiteinheiten ist.

9.  Verfahren nach einem der Ansprüche 6 bis 8, wobei die Ressource, die der ersten Ressource entspricht, eine periodische Ressource mit einer gleichen Frequenzbereichsposition wie die erste Ressource ist und ein festes Zeitintervall mit der ersten Ressource in einer Zeitbereichsposition aufweist.

10. Verfahren nach einem der Ansprüche 1 bis 9, wobei N basierend auf mindestens einer von einer Kanalbesetzungszeit-, COT, Dauer, einer verbleibenden COT-Dauer oder einer Kanalzugangspriorität bestimmt wird.

11. Verfahren zum Ressourcenausschluss, das auf ein Endgerät anwendbar ist, umfassend:

    Bestimmen eines Ressourcenauswahlfensters und eines Ressourcenerkennungsfensters;
    Bestimmen einer initialisierten zweiten Ressourcenmenge, wobei die initialisierte zweite Ressourcenmenge mindestens eine zweite Ressource innerhalb des Ressourcenauswahlfensters umfasst;
    Ausführen eines Ressourcenausschlusses an der initialisierten zweiten Ressourcenmenge durch einen Ressourcenausschlussprozess, wobei der Ressourcenausschlussprozess einen zweiten Ausschlussprozess umfasst, wobei der zweite Ausschlussprozess dazu konfiguriert ist, den Ressourcenausschluss basierend auf ersten Sidelink-Steuerinformationen, die innerhalb des Ressourcenerkennungsfensters überwacht werden, auszuführen; und
    beim Ausführen des Ressourcenausschlusses an einer zweiten Ressourcenmenge, Anheben (910) einer Schwelle einer empfangenen Referenzsignalleistung, RSRP, für den Fall, dass eine Anzahl von zweiten Ressourcen in der zweiten Ressourcenmenge, die eine erste Bedingung erfüllen, kleiner als eine erste Schwelle ist, und Wiederausführen des Ressourcenausschlusses an der zweiten Ressourcenmenge bei der Initialisierung der zweiten Ressourcenmenge, wobei die erste Bedingung mindestens N aufeinanderfolgende Zeiteinheiten von einer Zeiteinheit einer zweiten Ressource umfasst, die alle eine nicht ausgeschlossene zweite Ressource umfassen, wobei N eine Ganzzahl größer als 1 ist;
    **dadurch gekennzeichnet, dass** der zweite Ausschlussprozess umfasst:
    Bestimmen von Q2 Zeiteinheiten, die einer ersten Zeiteinheit entsprechen, basierend auf der ersten Zeiteinheit, in der die ersten Sidelink-Steuerinformationen überwacht werden, und auf einer Ressourcenbelegungsperiode, die in den ersten Sidelink-Steuerinformationen angegeben wird, und unter der Annahme, dass die ersten Sidelink-Steuerinformationen mit dem gleichen Inhalt innerhalb der Q2 Zeiteinheiten zu empfangen sind, wobei Q2 eine positive Ganzzahl ist; und Ausschließen der zweiten Ressource aus der zweiten Ressourcenmenge für den Fall, dass sich eine Ressource, die in den ersten Sidelink-Steuerinformationen angegeben wird, die überwacht und als empfangen angenommen werden, mit der ersten Ressource in der zweiten Ressourcenmenge überlappt oder sich mit einer Ressource überlappt, die der zweiten Ressource entspricht und eine Schwellenbedingung einer empfangenen Referenzsignalleistung, RSRP, erfüllt.

12. Verfahren nach Anspruch 11, wobei die zweite Ressource U zusammenhängenden Teilkanälen oder verschachtelten Ressourcenblöcken, IRBs, in einem Frequenzbereich entspricht, wobei jeder der U zusammenhängenden Teilkanäle einen oder mehrere zusammenhängende IRBs umfasst, und U eine positive Ganzzahl ist.

13. Verfahren nach Anspruch 11 oder 12, wobei der Ressourcenausschlussprozess ferner einen ersten Ausschlussprozess umfasst, wobei der erste Ausschlussprozess dazu konfiguriert ist, den Ressourcenausschluss basierend auf einer nicht überwachten Zeiteinheit innerhalb des Ressourcenerkennungsfensters auszuführen.

14. Gerät zur Ressourcenauswahl, umfassend

ein Ausschlussmodul, das konfiguriert ist zum: Bestimmen eines Ressourcenauswahlfensters und eines Ressourcenerkennungsfensters; Bestimmen einer initialisierten ersten Ressourcenmenge, wobei die initialisierte erste Ressourcenmenge mindestens eine erste Ressource innerhalb des Ressourcenauswahlfensters umfasst; und Ausführen eines Ressourcenausschlusses an der initialisierten ersten Ressourcenmenge durch einen Ressourcenausschlussprozess, wobei der Ressourcenausschlussprozess einen zweiten Ausschlussprozess umfasst, wobei der zweite Ausschlussprozess dazu konfiguriert ist, den Ressourcenausschluss basierend auf ersten Sidelink-Steuerinformationen, die innerhalb des Ressourcenerkennungsfensters überwacht werden, auszuführen; und
ein Auswahlmodul (1110), das dazu konfiguriert ist, eine Übertragungsressource aus einer ersten Ressourcenmenge nach dem Ressourcenausschluss an der ersten Ressourcenmenge auszuwählen; wobei eine beliebige Ressource in der ersten Ressourcenmenge eine erste Ressource ist, wobei die erste Ressource N aufeinanderfolgenden Zeiteinheiten in einem Zeitbereich entspricht, wobei N eine Ganzzahl größer als 1 ist;
**dadurch gekennzeichnet, dass** der zweite Ausschlussprozess umfasst:
Bestimmen von Q2 Zeiteinheiten, die einer ersten Zeiteinheit entsprechen, basierend auf der ersten Zeiteinheit, in der die ersten Sidelink-Steuerinformationen überwacht werden, und auf einer Ressourcenbelegungsperiode, die in den ersten Sidelink-Steuerinformationen angegeben wird, und unter der Annahme, dass die ersten Sidelink-Steuerinformationen mit dem gleichen Inhalt innerhalb der Q2 Zeiteinheiten zu empfangen sind, wobei Q2 eine positive Ganzzahl ist; und Ausschließen der ersten Ressource aus der ersten Ressourcenmenge für den Fall, dass sich eine Ressource, die in den ersten Sidelink-Steuerinformationen angegeben wird, die überwacht werden und als empfangen angenommen werden, mit der ersten Ressource in der ersten Ressourcenmenge überlappt oder sich mit einer Ressource überlappt, die der ersten Ressource entspricht und eine Schwellenbedingung einer empfangenen Referenzsignalleistung, RSRP, erfüllt.

## Revendications

1. Procédé de sélection de ressources, applicable à un dispositif terminal, comprenant les étapes suivantes :

déterminer une fenêtre de sélection de ressources et une fenêtre de détection de ressources ;
déterminer un premier ensemble de ressources initialisé, dans lequel le premier ensemble de ressources initialisé comprend au moins une première ressource dans la fenêtre de sélection de ressources ;
réaliser une exclusion de ressources sur le premier ensemble de ressources initialisé par un processus d'exclusion de ressources, dans lequel le processus d'exclusion de ressources comprend un deuxième processus d'exclusion, dans lequel le deuxième processus d'exclusion est configuré pour réaliser l'exclusion de ressources sur la base de premières informations de contrôle de liaison latérale surveillées dans la fenêtre de détection de ressources ; et
sélectionner (710) une ressource de transmission dans un premier ensemble de ressources après l'exclusion de ressources sur le premier ensemble de ressources ; dans lequel toute ressource du premier ensemble de ressources est une première ressource, dans lequel la première ressource correspond à N unités de temps consécutives dans un domaine temporel, N étant un entier supérieur à 1 ;
**caractérisé en ce que** le deuxième processus d'exclusion comprend ce qui suit :

déterminer Q2 unités de temps correspondant à une première unité de temps sur la base de la première unité de temps où les premières informations de contrôle de liaison latérale sont surveillées et d'une période de réservation de ressources indiquée dans les premières informations de contrôle de liaison latérale, et en supposant que les premières informations de contrôle de liaison latérale ayant le même contenu doivent être reçues dans les Q2 unités de temps, Q2 étant un nombre entier positif ; et exclure la première ressource du premier ensemble de ressources dans le cas où une ressource indiquée dans les premières informations de contrôle de liaison latérale qui sont surveillées et supposées être reçues se chevauche avec la première ressource du premier ensemble de ressources ou se chevauche avec une ressource correspondant à la première ressource et satisfait à une condition de seuil de puissance de signal de référence reçue, RSRP.

2. Procédé selon la revendication 1, dans lequel la première ressource correspondant aux N unités de temps consécutives dans le domaine temporel comprend :
la première ressource correspondant à N unités de temps physiques consécutives dans le domaine temporel.

3. Procédé selon la revendication 1 ou 2, dans lequel la première ressource correspond à U sous-canaux ou blocs de ressources entrelacés, IRB, contigus dans un domaine fréquentiel, dans lequel chacun des U sous-canaux contigus comprend un ou plusieurs IRB contigus, U étant un nombre entier positif.

4. Procédé selon la revendication 3, dans lequel les U sous-canaux ou IRB contigus se trouvent dans un même ensemble de blocs de ressources.

5. Procédé selon l'une quelconque des revendications 1 à 4, dans lequel le processus d'exclusion de ressources comprend en outre une première exclusion, dans lequel le premier processus d'exclusion est configuré pour réaliser l'exclusion de ressources sur la base d'une unité de temps non surveillée dans la fenêtre de détection de ressources.

6. Procédé selon la revendication 5, dans lequel le premier processus d'exclusion comprend ce qui suit :

déterminer Q1 unités de temps correspondant à l'unité de temps non surveillée sur la base de l'unité de temps non surveillée et de chaque période de réservation de ressources d'un ensemble de périodes de réservation de ressources configuré dans une réserve de ressources ou dans des sous-ensembles d'un ensemble de périodes de réservation de ressources, Q1 étant un nombre entier positif ; et
exclure la première ressource du premier ensemble de ressources dans le cas où les Q1 unités de temps se chevauchent avec la première ressource dans le premier ensemble de ressources ou se chevauchent avec une ressource correspondant à la première ressource.

7. Procédé selon la revendication 1, dans lequel la ressource indiquée dans les premières informations de contrôle de liaison latérale est une ressource déterminée sur la base d'au moins un des champs d'indication suivants :

un premier champ d'indication indiquant une position de domaine temporel de la ressource ; ou
un deuxième champ d'indication indiquant une position de domaine fréquentiel de la ressource.

8. Procédé selon la revendication 1 ou 7, dans lequel la ressource indiquée dans les premières informations de contrôle de liaison latérale est une ressource d'une ou plusieurs unités de temps uniques.

9. Procédé selon l'une quelconque des revendications 6 à 8, dans lequel la ressource correspondant à la première ressource est une ressource périodique avec une même position de domaine fréquentiel que la première ressource et ayant un intervalle de temps fixe avec la première ressource dans une position de domaine temporel.

10. Procédé selon l'une quelconque des revendications 1 à 9, dans lequel N est déterminé sur la base d'au moins une parmi une durée de temps d'occupation de canal, COT, une durée COT restante ou une priorité d'accès de canal.

11. Procédé d'exclusion de ressources, applicable à un dispositif terminal, comprenant les étapes suivantes :

déterminer une fenêtre de sélection de ressources et une fenêtre de détection de ressources ;
déterminer un deuxième ensemble de ressources initialisé, dans lequel le deuxième ensemble de ressources initialisé comprend au moins une deuxième ressource dans la fenêtre de sélection de ressources ;
réaliser une exclusion de ressources sur le deuxième ensemble de ressources initialisé par un processus d'exclusion de ressources, dans lequel le processus d'exclusion de ressources comprend un deuxième processus d'exclusion, dans lequel le deuxième processus d'exclusion est configuré pour réaliser l'exclusion de ressources sur la base de premières informations de contrôle de liaison latérale surveillées dans la fenêtre de détection de ressources ; et

à la réalisation de l'exclusion de ressources sur un deuxième ensemble de ressources, élever (910) un seuil de puissance de signal de référence reçue, RSRP, dans le cas où un nombre de deuxièmes ressources du deuxième ensemble de ressources satisfaisant à une première condition est inférieur à un premier seuil, et réaliser à nouveau l'exclusion de ressources sur le deuxième ensemble de ressources lors de l'initialisation du deuxième ensemble de ressources, dans lequel la première condition comprend le fait qu'au moins N unités de temps consécutives à partir d'une unité de temps d'une deuxième ressource comprennent toutes une deuxième ressource non exclue, N étant un entier supérieur à 1 ;

**caractérisé en ce que** le deuxième processus d'exclusion comprend ce qui suit :

déterminer Q2 unités de temps correspondant à une première unité de temps sur la base de la première unité de temps où les premières informations de contrôle de liaison latérale sont surveillées et d'une période de réservation de ressources indiquée dans les premières informations de contrôle de liaison latérale, et en supposant que les premières informations de contrôle de liaison latérale ayant le même contenu doivent être reçues dans les Q2 unités de temps, Q2 étant un nombre entier positif ; et exclure la deuxième ressource du deuxième ensemble de ressources dans le cas où une ressource indiquée dans les premières informations de contrôle de liaison latérale qui sont surveillées et supposées être reçues se chevauche avec la deuxième ressource du deuxième ensemble de ressources ou se chevauche avec une ressource correspondant à la deuxième ressource et satisfait à une condition de seuil de puissance de signal de référence reçue, RSRP.

12. Procédé selon la revendication 11, dans lequel la deuxième ressource correspond à U sous-canaux ou blocs de ressources entrelacés, IRB, contigus dans un domaine fréquentiel, dans lequel chacun des U sous-canaux contigus comprend un ou plusieurs IRB contigus, U étant un nombre entier positif.

13. Procédé selon la revendication 11 ou 12, dans lequel le processus d'exclusion de ressources comprend en outre un premier processus d'exclusion, dans lequel le premier processus d'exclusion est configuré pour réaliser l'exclusion de ressources sur la base d'une unité de temps non surveillée dans la fenêtre de détection de ressources.

14. Appareil de sélection de ressources, comprenant

un module d'exclusion configuré pour : déterminer une fenêtre de sélection de ressources et une fenêtre de détection de ressources ; déterminer un premier ensemble de ressources initialisé, dans lequel le premier ensemble de ressources initialisé comprend au moins une première ressource dans la fenêtre de sélection de ressources ; et réaliser une exclusion de ressources sur le premier ensemble de ressources initialisé par un processus d'exclusion de ressources, dans lequel le processus d'exclusion de ressources comprend un deuxième processus d'exclusion, dans lequel le deuxième processus d'exclusion est configuré pour réaliser l'exclusion de ressources sur la base de premières informations de contrôle de liaison latérale surveillées dans la fenêtre de détection de ressources ; et

un module de sélection (1110) configuré pour sélectionner une ressource de transmission dans un premier ensemble de ressources après l'exclusion de ressources sur le premier ensemble de ressources ; dans lequel toute ressource du premier ensemble de ressources est une première ressource, dans lequel la première ressource correspond à N unités de temps consécutives dans un domaine temporel, N étant un entier supérieur à 1 ;

**caractérisé en ce que** le deuxième processus d'exclusion comprend ce qui suit :

déterminer Q2 unités de temps correspondant à une première unité de temps sur la base de la première unité de temps où les premières informations de contrôle de liaison latérale sont surveillées et d'une période de réservation de ressources indiquée dans les premières informations de contrôle de liaison latérale, et en supposant que les premières informations de contrôle de liaison latérale ayant le même contenu doivent être reçues dans les Q2 unités de temps, Q2 étant un nombre entier positif ; et exclure la première ressource du premier ensemble de ressources dans le cas où une ressource indiquée dans les premières informations de contrôle de liaison latérale qui sont surveillées et supposées être reçues se chevauche avec la première ressource du premier ensemble de ressources ou se chevauche avec une ressource correspondant à la première ressource et satisfait à une condition de seuil de puissance de signal de référence reçue, RSRP.

FIG. 1

FIG. 2

PSSCH
PSCCH

PSSCH  PSCCH

TB1

Initial
transmission Retransmission 1
Retransmission 2

TB2

Initial
transmission Retransmission 1
Retransmission 2

FIG. 3

(a)

20                                    10

n-$T_0$        $t_m$  n  n+$T_1$        R(x,y)      n+$T_2$  t

(b)

20                                    10

E(v,m)  1      2    3    4    5  6

R(x,y)

n-$T_0$      z      $t_m$  n  n+$T_1$      $t_{m+Prxlg}$    n+$T_2$  t

FIG. 4

FIG. 5

FIG. 6

Selecting a transmission resource from a first resource set after resource exclusion on the first resource set; wherein any resource in the first resource set is a first resource, wherein the first resource corresponds to N continuous consecutive time units in a time domain, N being an integer greater than 1

710

FIG. 7

(a)

(b)

FIG. 8

Upon performing resource exclusion on a second resource set, raising an RSRP threshold in a case that a number of second resources in the second resource set meeting a first condition is less than a first threshold, and reperforming the resource exclusion on the second resource set upon initialization of the second resource set, wherein the first condition includes at least N continuous consecutive time units from a time unit of a second resource all including a non-excluded second resource, wherein N is an integer greater than 1

910

FIG. 9

FIG. 10

FIG. 11

Excluding
module

1210

1200

FIG. 12

Terminal device 1300

Processor 1301

Transceiver 1302

Wireless
communication chip

Radio frequency
antenna

Wireless communication
assembly

Memory 1303

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021203974 A1

- WO 2021262577 A1

**Non-patent literature cited in the description**

- **MODERATOR (OPPO**. FL summary #3 for AI 9.4.1.1: SL-U channel access mechanism. *3GPP DRAFT; R1-2205182, 3RD GENERATION PARTNERSHIP PROJECT (3GPP), MOBILE COMPETENCE CENTRE*, 09 May 2022, vol. RAN WG1 (e-Meeting)